# EUROPÄISCHE PATENTSCHRIFT

(11) **EP 2 327 043 B1**
(45) Veröffentlichungstag und Bekanntmachung des Hinweises auf die Patenterteilung: **11.03.2015**
(21) Anmeldenummer: 09776714.9
(22) Anmeldetag: 12.06.2009
(51) Int. Cl.: G06K 9/20, G06K 9/00

(54) **VORRICHTUNG ZUR AUFNAHME VON BIOMETRISCHEN DATEN**
APPARATUS FOR RECEIVING BIOMETRIC DATA
DISPOSITIF POUR ENREGISTRER DES DONNÉES BIOMÉTRIQUES

(30) Priorität: 14.08.2008 DE 102008037741
(43) Veröffentlichungstag der Anmeldung: 01.06.2011
(73) Patentinhaber: Touchless Biometric Systems AG, 8808 Pfäffikon (CH)
(72) Erfinder: MAURER, Chris, 78464 Konstanz (DE); VAN DIEPEN, Roger, CH-8802 Kilchberg (CH)
(74) Vertreter: Schulz, Manfred
(86) Internationale Anmeldenummer: PCT/EP2009/004221
(87) Internationale Veröffentlichungsnummer: WO 2010/017858

(56) Entgegenhaltungen:
- EP-A- 0 168 007
- EP-A- 1 643 416
- WO-A-2007/050776
- US-A- 5 177 802
- US-A1- 2006 120 576
- US-A1- 2008 056 539

## Beschreibung

Die Erfindung betrifft eine Vorrichtung zur Aufnahme von biometrischen Daten, wie zum Beispiel Finger- und/oder Handlinien, wobei an der Vorrichtung eine Anlage für die Hand beziehungsweise Finger sowie eine Beleuchtungseinheit vorgesehen ist. Eingangs beschriebene Vorrichtungen sind im Stand der Technik bekannt. Aus dem Stand der Technik ist eine Lösung bekannt, aus der hervorgeht, dass der Fingerabdruck mit einem Lichtstrahl mit aufeinanderfolgenden Abtastungen über dem Fingerabdruck genommen wird, wobei dieser und der Lichtstrahl relativ zueinander bewegt werden.

Des Weiteren ist eine Vorrichtung zur Messung von Erhöhungen und/oder Vertiefungen einer Oberfläche bekannt.

Aus der Europäischen Patentanmeldung EP 0 168 007 A2 ist ein Verfahren und eine Vorrichtung zur Aufnahme von Fingerlinien bekannt. Hierbei wird mit Hilfe eines Laserstrahles ein Bereich eines Fingers aufgenommen. Dabei muss dieser Laserstrahl zunächst durch zwei Linsen entsprechend gerichtet werden, bevor er auf den aufzunehmenden Fingerbereich auftrifft. Das zurückgeworfene Licht wird über zwei weitere Linsen dann auf einen CCT-Ray geführt und dort aufgenommen. Eine ähnliche Lösung ist der Druckschrift EP 1 643 416 A2 zu entnehmen.

Ein System und ein Verfahren für 3D-Objekte mit Hilfe einer Lichtstrahlung ist der WO 2007/050776 A2 zu entnehmen. Auch diese Vorrichtung ist insbesondere dazu geeignet, Handprint-Aufnahmen für biometrische Zwecke anzufertigen.

Aus der US-amerikanischen Patentschrift US 5,177,802 ist eine Lösung bekannt, von der die vorliegende Erfindung ausgeht. In dieser Lösung wird allerdings eine Positioniersteuerung nicht offenbart, die Informationen über die Lage und/oder Größe und/ oder Ausrichtung der Finger und/oder der Hand auswertet. Dabei wird eine Bildaufnahme dann gestartet, wenn mit dem Finger ein Schalter berührt wird. Des weiteren ist es möglich die Bewegungen der Finger in Y-Achse zu messen. Nachteilig bei dieser Lösung ist, dass die Größe eines Fingers oder einer Hand nach der Entgegenhaltung nicht gemessen werden kann.

Es ist Aufgabe der vorliegenden Vorrichtung, wie eingangs beschrieben, Aufnahmen, also Bilder, in guter Qualität innerhalb vertretbarer Zeit zu erstellen.

Zur Lösung dieser Aufgabe geht die Erfindung aus von einer Vorrichtung, wie eingangs beschrieben, und schlägt die Merkmale der unabhängigen Ansprüche 1 und 15 vor. Dabei ist eine verfahrbare, positionierbare Beleuchtungseinheit und/oder eine verfahrbare, positionierbare Anlage und eine Positioniersteuerung vorgesehen und die Vorrichtung zeichnet sich dadurch aus, dass die Positioniersteuerung Informationen über die Lage und/oder Größe und/oder Ausrichtung der Finger und/oder Hand auswertet.

Die Anlage dient dazu, der Hand, in der Regel der Handwurzel oder dem Handballen, ein entsprechendes Widerlager zu bieten. Dabei kann die Anlage zum Beispiel als Auflage ausgebildet sein, also die Hand liegt auf der Anlage auf, oder aber die Anlage ist oberhalb der Handfläche angeordnet, wenn zum Beispiel die Hand mit der Handfläche nach oben gegen die Anlage gedrückt wird. Die Anlage kann aber auch vertikal orientiert sein.

Es ist erkannt worden, dass für das Erstellen einer Aufnahme in guter Qualität die Ausleuchtung der Fingeroberfläche und die richtige Positionierung des zu fotografierenden beziehungsweise abzubildenden Fingers/Handbereichs bezüglich der Aufnahmeeinheit von großer Bedeutung ist. Dabei wird geschickterweise die Relativposition der Anlage und der Beleuchtungseinheit so eingestellt, dass die optimalen optischen Verhältnisse gegeben sind.

Um eine optimale optische Anordnung zu erreichen, ist gefunden worden, dass es mehrere Varianten gibt. Hier zählt zunächst eine verfahrbare, positionierbare Beleuchtungseinheit, die bevorzugt zum Beispiel mit einer feststehenden Anlage für die Hand kombiniert wird. Dies ist auch die Variante der Erfindung, die in den beiliegenden Figuren erläutert wird. Hierauf ist die Erfindung aber in keinster Weise beschränkt. Als zweite Variante ist nämlich erfindungsgemäß vorgesehen, eine verfahrbare, positionierbare Anlage vorzusehen, die bevorzugt mit einer feststehenden Beleuchtungseinheit kombiniert wird. Auf einer solchen Kombination ist eine Relativpositionierung der Finger beziehungsweise Hand bezüglich der Beleuchtungseinheit möglich, um relativ gute Aufnahmen in vertretbarer Zeit zu erzielen.

Als dritte erfindungsgemäße Variante ist vorgesehen, dass sowohl die Beleuchtungseinheit wie auch die Anlage verfahrbar und positionierbar sind. Hierdurch wird insbesondere eine sehr schnelle gegenseitige Ausrichtung erreicht, da die Positionierbewegungen auf die beiden Elemente, die Beleuchtungseinheit und die Anlage verteilt werden.

Die bekannte Vorrichtung aus dem Stand der Technik, die eine aufeinanderfolgende Abtastung über dem Fingerabdruck vornimmt, hat den Nachteil, dass zwischen der Beleuchtungseinheit bzw. der Anlage und der Hand bzw. den Fingern sich keine weiteren Bauteile befinden. Demzufolge ist eine berührungslose Aufnahme der biometrischen Daten durch die Entgegenhaltungen im Stand der Technik nicht bekannt, weil dort die Finger auf einer Platte aufliegen. Des Weiteren ist in dieser Entgegenhaltung nicht offenbart, dass die Positioniersteuerung Informationen über die Lage und/oder Größe und/oder Ausrichtung der Finger und/oder der Hand auswertet. Vielmehr wird dort nur offenbart, dass ein Umsetzter vorgesehen ist, der ein Signal erzeugt, wenn sich eine Stütze, auf der beispielsweise die Finger aufliegen oder die Hand aufliegt, um eine vorgegebene Strecke verschoben wird.

In der zweiten bekannten Lösung des Standes der Technik, die eingangs beschrieben wurde, ist lediglich beschrieben, dass es möglich ist, die Beleuchtungseinheit mit mindestens zwei Arten unterschiedlicher Beleuchtungselemente auszustatten, die sich bezüglich der abgestrahlten Lichtfarbe unterscheiden. Ein Hinweis darauf, eine Vorrichtung, wie sie im Stand der Technik und im Oberbegriff in Anspruch 1 definiert wurde, so weiterzubilden, dass eine Positioniersteuerung Informationen über die Lage und/oder die Größe und/oder Ausrichtung der Finger und/oder der Hand auswertet, ist in dieser Druckschrift nicht beschrieben. Durch diese Ausgestaltung gelingt es allerdings, eine genaue Positionierung der Hand bzw. Finger vorzunehmen, um optimale Aufnahmeergebnisse zu erreichen. Bei einer Vielzahl der Lösungen des Standes der Technik ist es nämlich der Fall, dass eine Reihe von Aufnahmen nicht verwertbar sind, weshalb sich neue Aufnahmen erforderlich machen. Dadurch verzögert sich selbstverständlich der gesamte Aufnahme- und Auswertungsvorgang erheblich. Diese Nachteile werden durch die Lösung nach der Erfindung komplett behoben.

Ein wesentlicher Vorzug der Erfindung ist, dass sich zwischen der Beleuchtungseinheit und der Hand beziehungsweise Finger keine weiteren Bauteile befinden, insbesondere die Aufnahme der biometrischen Daten berührungslos erfolgt. Durch das berührungslose Abtasten der Oberfläche und durch die Aufnahme des entsprechenden Abbildes wird ein absolut verzerrungsfreies Bild des Fingers beziehungsweise der Handlinien gewonnen, was die Vergleichbarkeit erheblich erleichtert. Auf die ansonsten im Stand der Technik bekannten transparenten Auflagefenster, auf welche die Finger aufzulegen sind, wird verzichtet. Damit verbessert sich auch die Aufnahmequalität selber, nämlich Schweiß, Schmutz und sonstige Ablagerungen auf diesen Auflagefenstern beeinträchtigen sonst die bildliche Darstellung. Da diese aus transparenten Materialien bestehenden Auflagen erfindungsgemäß nicht vorgesehen sind, wird in einfacher Weise eine Verbesserung der Bildqualität gewonnen.

Um eine optimale Positionierung der Beleuchtungseinheit beziehungsweise der Anlage zu erreichen, wird nach der Erfindung für die Positionierung der Beleuchtungseinheit beziehungsweise der Anlage eine Positioniersteuerung vorgesehen.

Mit Hilfe der Positioniersteuerung werden Informationen über die Lage, Größe und/oder Ausrichtung der Finger beziehungsweise der Hand ausgewertet. Dabei ist es erfindungsgemäß möglich, dass mit Hilfe der erfindungsgemäßen Vorrichtung sowohl nur das Abbild eines Fingers oder das Abbild mehrerer Finger gleichzeitig aufgenommen werden. Um aber den verhältnismäßig komplexen optischen Gegebenheiten Rechnung zu tragen, ist eine optimale Positionierung der Anlage beziehungsweise der Beleuchtungseinheit vorgesehen. Hierfür ist zunächst die exakte Lage, Größe und auch Ausrichtung des Fingers beziehungsweise der Finger und/oder der Hand notwendig.

Hierzu ist die erfindungsgemäße Vorrichtung insbesondere mit einem Positioniersensor ausgestattet, der der Positioniersteuerung Informationen über die Lage, Größe und/oder Ausrichtung der Finger und/oder der Hand übermittelt. Natürlich übermittelt der Positioniersensor, je nach Ausgestaltung der Vorrichtung, auch Informationen von Handbereichen oder auch mehreren Fingern. Geschickterweise ist der Positioniersensor hier zum Beispiel eine Flächenkamera oder eine Zeilenkamera (CCD), und mit geeigneten algorithmischen Vorschriften wird von der bevorzugt als gespreizten Hand vorliegenden Aufnahme des Positioniersensors die Richtung, also die Orientierung, des idealerweise als Zylinder angenommenen Fingers sowie deren Ende ermittelt. Mit Hilfe dieser Informationen ermittelt dann die Positioniersteuerung die jeweiligen Koordinaten, an welche entweder die Anlage und/oder die Beleuchtungseinheit zu positionieren ist, um ein optimales Bild beziehungsweise Aufnahme zu erstellen.

Für die Ausgestaltung des Positioniersensors an beziehungsweise in der Vorrichtung bestehen erfindungsgemäß auch mehrere Varianten. Zunächst wird vorgeschlagen, dass der Positioniersensor an der Vorrichtung ortsfest angeordnet ist. Dabei ist der Positioniersensor geschickterweise auf der Seite der Hand beziehungsweise des Fingers angeordnet, die der Beleuchtungseinheit gegenüberliegt. Das bedeutet, ist zum Beispiel die Beleuchtungseinheit unterhalb der Hand beziehungsweise des Fingers angeordnet, so ist der Positioniersensor oberhalb vorgesehen. Dadurch wird der Platz in der Vorrichtung optimal ausgenutzt und die einzelnen Elemente stören einander nicht. Natürlich ist auch die kinematische Umkehr erfindungsgemäß umfasst, das heißt, falls die Beleuchtungseinheit oberhalb der Hand angeordnet ist, so ist geschickterweise der Positioniersensor unterhalb der Hand vorgesehen. Grundsätzlich ist es aber auch möglich, dass der Positioniersensor und die Beleuchtungseinheit auch beide auf der gleichen Seite der Hand vorgesehen sind.

Nach der Erfindung ist es vorgesehen, dass der Positioniersensor mit der Beleuchtungseinheit beziehungsweise der Anlage mitfahrend ausgebildet ist. Bei einer solchen Ausgestaltung kann in einfacher Weise eine Selbstjustierung der Anlage beziehungsweise der Beleuchtungseinheit bezüglich des anderen Elementes, also der Beleuchtungseinheit beziehungsweise der Anlage erfolgen.

Um die Aufnahme der biometrischen Daten, also der Hand- beziehungsweise der Fingerlinien nicht zu beeinträchtigen, wird geschickterweise für den Positioniersensor ein anderer Spektralbereich verwendet wie für die Aufnahme des Fingers beziehungsweise der Hand. Es hat sich hierfür zum Beispiel infrarotes Licht als günstig ergeben. Es kann aber auch jeder andere Spektralbereich Verwendung finden. Natürlich ist der Positioniersensor bezüglich seiner spektralen Empfindlichkeit auf dieses Wellenlängenintervall angepasst. Unter Umständen kommt man dann auch ohne eine zusätzliche Beleuchtung aus, wenn man die Sensitivität der Kamera auf die Wärmeentwicklung der menschlichen Hand beziehungsweise des Fingers abstellt. Andernfalls wird zum Beispiel auf der dem Positioniersensor abgewandten Seite der Hand eine entsprechende Beleuchtung angeordnet, und der Sensor detektiert das Schattenbild. Um den Benutzer nicht zu erschrecken, wird dabei geschickterweise mit Wellenlängen gearbeitet, die vom Menschen nicht registriert werden und/oder mit Beleuchtungsstärken gearbeitet, die für den Menschen ebenfalls unmerklich oder unschädlich sind.

Erfindungsgemäß wird eine Verfahrbarkeit beziehungsweise Positionierbarkeit der Beleuchtungseinheit beziehungsweise der Anlage vorgeschlagen. Dies bedingt natürlich einen entsprechenden Fahrantrieb, entweder für die Beleuchtungseinheit und/oder die Anlage. Die von der Positioniersteuerung ermittelten Positionskoordinaten werden dabei auf den jeweiligen Fahrantrieb oder Drehantrieb (siehe unten) gegeben. Mit Hilfe des Positioniersensors wird also zunächst die Lage, Ort und Größe des Fingers, mehrerer Finger, eines Handbereiches oder der Hand ermittelt und als entsprechende Zielkoordinate zur Verfügung gestellt. Mit Hilfe dieser Zielkoordinate steuert dann die Positioniersteuerung die entsprechenden Fahrantriebe so, dass die Beleuchtungseinheit beziehungsweise die Anlage optimal positioniert ist.

In einer bevorzugten Ausgestaltung der Erfindung ist vorgesehen, dass während einer Positionierung der Beleuchtungseinheit beziehungsweise Anlage bezüglich eines ersten Fingers oder Handbereiches die aktuelle Lage des Fingers beziehungsweise Handbereiches von dem Positioniersensor weiterhin erfasst wird und Informationen über Lage, Größe und/oder Ausrichtung des Fingers beziehungsweise Handbereiches fortlaufend für Nachregelzwecke der Fahrantriebe beziehungsweise Drehantriebe an die Positioniersteuerung übermittelt werden. Ergibt es sich, dass während der Ausrichtung der Anlage beziehungsweise Beleuchtungseinheit auf einem ersten Finger dieser Finger verrutscht oder bewegt wird, so muss natürlich die Beleuchtungseinheit beziehungsweise die Anlage diesem Umstand folgen können. Es wird also eine Nachregelung etabliert, um eine möglichst optimale optische Anordnung zu gewährleisten. Es ist klar, dass dabei die Lage, Größe und/oder Ausrichtung des Fingers eine Rolle spielt, wobei je nach Ausgestaltung entweder nur die Lage oder nur die Größe oder nur die Ausrichtung des Fingers beziehungsweise des Handbereiches (mehrere Finger, ein Teil der Hand oder die gesamte Hand) kontrolliert und beobachtet wird. Dies gilt auch an anderer Stelle dieser Erfindung.

In einer weiteren Verbesserung der Erfindung wird vorgeschlagen, dass während einer Positionierung der Beleuchtungseinheit beziehungsweise Anlage bezüglich eines ersten Fingers oder Handbereiches der Positioniersensor die Lage, Größe und/oder Ausrichtung eines zweiten Fingers oder Handbereiches ermittelt und an die Positioniersteuerung überträgt, welche daraus die Positionierdaten für die Fahrantriebe ermittelt, damit nach Abschluss der Aufnahme der biometrischen Daten an dem ersten Finger beziehungsweise Handbereich eine Positionierung an dem zweiten Finger oder Handbereich erfolgt. Mit diesem Vorschlag wird eine simultane Positionserfassung vorgeschlagen, während die Anlage beziehungsweise Beleuchtungseinheit noch auf dem ersten Finger beziehungsweise Handbereich gerichtet bleibt. Es wird mit diesem Vorschlag eine entsprechende Beschleunigung für die Aufnahme der einzelnen Bilder erreicht, da bereits nach Abschluss der Aufnahme für den ersten Finger beziehungsweise Handbereich sofort ein Umsetzen der Anlage beziehungsweise der Beleuchtungseinheit zu dem zweiten Finger beziehungsweise Handbereich erfolgt. Es muss hierzu nicht noch gewartet werden, bis entsprechende Daten gesammelt und ausgewertet sind. Dieser, wie auch der vorgenannte Gedanke wird insbesondere durch eine entsprechend hohe Rechenleistung und geschickte Algorithmik erreicht und führt letztendlich zu einer Verkürzung der notwendigen Bearbeitungszeiten bei gleichbleibend hoher Qualität der resultierenden Aufnahmen. Letztendlich werden nach diesem Vorschlag entsprechende Totzeiten minimiert. Es ist klar, dass die vorgenannten bezüglich der Vorrichtung genannten Gedanken auch im Rahmen eines Verfahrens zur Aufnahme von biometrischen Daten beanspruchbar sind und hiermit mitoffenbart sind. Insbesondere ist erfindungsgemäß vorgesehen, dass auch alle anderen, nur bezüglich der Vorrichtung beschriebenen Merkmale, die auch im Zusammenhang mit Verfahrensansprüchen zu beanspruchen sind, beziehungsweise auch solche Merkmalskombinationen aus Verfahrens- und Vorrichtungsansprüchen als von der Erfindung umfasst gelten.

In einer bevorzugten Ausgestaltung der Erfindung ist vorgesehen, dass die Beleuchtungseinheit beziehungsweise die Anlage in einer oder mehreren Ebenen entlang zweier winklig, insbesondere rechtwinklig zueinander orientierter Achsen verfahrbar und positionierbar ist. Die Ebene ist dabei erfindungsgemäß über oder unterhalb der Anlage beziehungsweise der Hand angeordnet. Mit diesem erfindungsgemäßen Vorschlag wird erreicht, dass die Beleuchtungseinheit beziehungsweise die Anlage zumindest entlang zweier Achsen beweglich und positionierbar ist. Damit ist eine gute Positionierung der Beleuchtungseinheit beziehungsweise der Anlage relativ zueinander möglich.

Des Weiteren sieht die Erfindung vor, dass die Ebene über- und/oder unterhalb der Anlage angeordnet ist. Wie bereits ausgeführt, ist die Anordnung der Anlage bezüglich der verfahrbaren Beleuchtungseinheit sehr variabel, die Erfindung ermöglicht es, eine Anordnung zu wählen, bei welcher die Handfläche oder der Handrücken nach oben gerichtet ist. Hieraus resultiert dann, dass die Ebene überhalb der Anlage angeordnet ist, wenn die Handfläche oben orientiert ist. Ist der Handrücken oben orientiert, liegt in der Regel die Ebene unterhalb der Anlage. Die Ebene ist dabei so definiert, dass sie von den Führungsschienen, zum Beispiel einer Kreuzschienenführung oder ähnlichem, beschrieben ist. Je nach Ausgestaltung der Beleuchtungseinheit ist es auch möglich, dass zum Beispiel zwei Ebenen zur Führung der Beleuchtungseinheit vorgesehen sind und dann aus Stabilitätsgründen eine Ebene oberhalb und eine Ebene unterhalb der Anlage angeordnet ist. Dabei werden dieses Ebenen nicht zwingend dadurch definiert, dass an ihnen auch ein entsprechender Fahrantrieb vorgesehen ist. Eine Ebene ist auch schon dadurch definiert, dass sie der Führung (ohne Antrieb) dient.

Neben der Anordnung der Ebene ober- und/oder unterhalb der Anlage, umfasst die Erfindung auch eine Lösung, bei welcher die Ebene seitlich neben der Anlage angeordnet ist. In einem solchen Fall ist die Ebene zum Beispiel vertikal orientiert, weil auch die Handflächen im wesentlichen vertikal orientiert an der Anlage anliegen. Eine solche Anordnung ist sehr ergonomisch, da sie der überwiegenden Stellung der Hand entspricht.

In der einfachsten Ausgestaltung ist die Anlage zum Beispiel als Anlagekante ausgeführt. Oftmals wird es sich bei der Anlage auch um ein entsprechendes Flächenstück handeln, um zum Beispiel der Handfläche oder dem Handballen eine entsprechende Auflage zu bieten. Dadurch definiert sich dann auch die Orientierung und Ausrichtung der Hand, und es ist daher günstig, wenn die Ebene im Wesentlichen parallel hierzu orientiert ist.

Um eine optimale Beleuchtung der aufzunehmenden Handlinien, Fingerlinien, Handbereiche oder Finger und so weiter zu erreichen, sind eine Vielzahl von Beleuchtungselementen an der Beleuchtungseinheit vorgesehen.

Es wurde bereits ausgeführt, dass die Beleuchtungseinheit mindestens entlang einer, bevorzugt entlang zweier Achsen (in einer Ebene) gegebenenfalls auch entlang dreier Achsen, also im Raum positionierbar ist. Neben diesen Linearachsen ist aber auch vorgesehen, dass die Beleuchtungseinheit ein um eine Drehachse drehbares, die Beleuchtungselemente tragendes, durch einen Drehantrieb bewegbares und positionierbares Drehteil aufweist. Dadurch ist es möglich, dass die Beleuchtungseinheit optimal auf die Stellung der Finger ausgerichtet ist, da die Finger oftmals abgespreizt sind und daher in ihrer jeweiligen Längsachse immer um einen gewissen Verschwenkwinkel α zueinander angeordnet sind. Durch eine solche Ausgestaltung kann dieser Physionomie entsprochen werden, geschickterweise ist dabei die Drehachse winkelig, insbesondere rechtwinklig zur Ebene orientiert, dies ergibt sich aus den geometrischen Gegebenheiten. Die Erfindung ist aber hierauf nicht beschränkt, natürlich können auch anders orientierte Drehachsen oder zusätzlich orientierte Drehachsen vorgesehen sein, wodurch die Beleuchtungseinheit ein entsprechend komfortabel im Raum bewegbares und auch drehbares und somit positionierbares Element wird.

Wie bereits ausgeführt, ist eine Positioniersteuerung vorgesehen, die mit Hilfe des Positioniersensors die entsprechende Orientierung der Finger detektiert. Hieraus resultiert auch ein entsprechender Verschwenkwinkel a um die Drehachse, der berechnet wird und einzustellen ist, um eine optimale Aufnahme zu erhalten. Die Positioniersteuerung wirkt daher auch auf einen entsprechenden Drehantrieb.

Nach der Erfindung ist es vorgesehen, dass die Beleuchtungseinheit mit mindestens zwei Arten unterschiedlicher Beleuchtungselemente ausgestattet ist, die sich bezüglich der abgestrahlten Lichtfarbe unterscheiden. Für den Einsatz unterschiedlicher Lichtfarben, also unterschiedlicher spektraler Anteile, gibt es verschiedene Gründe. Zunächst ist dabei zu beachten, dass natürlich die resultierende Aufnahme von der Sensitivität der Aufnahmeeinheit, also der Kamera abhängt. Werden hier zum Beispiel grün- und blausensitive Kameras eingesetzt, so ist es natürlich günstig, die verwendete Lichtfarbe dieser Sensitivität anzupassen.

Des weiteren wird durch den Einsatz unterschiedlicher Spektralfarben oder Lichtfarben natürlich eine entsprechend unerwünschte Beeinflussung der unterschiedlichen Lichtquellen vermieden. Dies hängt letztendlich auch wieder von der entsprechenden Sensitivität ab. So kann zum Beispiel mit einer ersten oder mit zwei Lichtfarben (blau und grün) grundsätzlich eine Bleuchtung der Oberfläche im Ganzen erfolgen, mit Hilfe zum Beispiel von roter Lichtfarbe werden dann entsprechende Orientierungslinien oder andere Orientierungshilfen auf die Oberfläche projiziert, die aber die grundsätzliche Beleuchtung nicht beeinträchtigen.

Es wurde auch bereits darauf hingewiesen, zum Beispiel infrarotes Licht für den Betrieb des Positioniersensors einzusetzen, weil auch diese Lichtfarbe von den übrigen verwendeten Lichtfarben unterschiedlich ist.

Des weiteren ist vorgesehen, dass in der Vorrichtung weitere Beleuchtungsmittel angeordnet sind. Hiermit wird erreicht, dass neben den bewegbaren, also auf der Beleuchtungseinheit mitfahrenden Beleuchtungsmitteln, die in den Beleuchtungselementen realisiert sind, auch noch feststehende Beleuchtungsmittel angeordnet sind, die sich zum Beispiel in dem Gehäuse der Vorrichtung, zum Beispiel am Himmel, an den Seitenwänden oder am Boden in geeigneter Weise befinden. Unter Umständen sind aber auch diese Beleuchtungsmittel mit separaten Adaptierantrieben und so weiter ausgestattet, um spezielle zusätzliche Beleuchtungsaufgaben, zum Beispiel in schwierigen Bereichen zu übernehmen.

Erfindungsgemäß ist es dabei gleichwertig, ob das von der Beleuchtungseinheit abgestrahlte Licht und das von den (in der Vorrichtung bestehenden) Beleuchtungsmitteln abgestrahlte Licht gleicher oder unterschiedlicher Lichtfarbe ist. Auch die ortsfest in der Vorrichtung angeordneten Beleuchtungsmittel haben ebenfalls Ausleuchtungsaufgaben, um eine möglichst gute Aufnahme zu ermöglichen. Sie unterstützen daher die von der Beleuchtungseinheit erzeugten Beleuchtungsfelder in geeigneter Weise. Dies kann sowohl mit einem Einsatz von gleicher Lichtfarbe als auch mit Einsatz von unterschiedlichen Lichtfarben erfolgen, je nachdem, wie das Beleuchtungskonzept realisiert ist. So kann zum Beispiel das Beleuchtungsmittel in das Konzept der Verwendung unterschiedlicher Lichtfarben integriert sein, wenn entsprechend sensitive Kameras hierfür vorgesehen sind.

In einer bevorzugten Ausgestaltung der Erfindung ist vorgesehen, dass gerichtetes Licht der Beleuchtungselemente der Beleuchtungseinheit eingesetzt wird. Erfindungsgemäß wird eine sogenannte Hellfeldbeleuchtung vorgesehen. Die Aufnahmeeinheiten beobachten dabei die entsprechende Hand- beziehungsweise Fingerbereichsoberfläche in Totalreflexion. Dieses Konzept verbessert erheblich die Qualität der Aufnahmen und ermöglicht es, in verhältnismäßig kurzer Zeit die gewünschten Aufnahmen zu erstellen. Mit diesem Konzept wird auch eine verhältnismäßig kontrastreiche Aufnahme erzielt, um insbesondere die Berge bei den Fingerlinien von den begrenzenden Tälern zu unterscheiden.

Alternativ zu dem Einsatz eines gerichteten Lichtes, welches zum Beispiel durch eine entsprechende Abbildungsoptik realisiert wird, ist erfindungsgemäß in gleicher Weise auch der Einsatz eines diffusen Lichtfeldes der Beleuchtungseinheit möglich. Ein entsprechend diffuses Lichtfeld wird zum Beispiel mit Hilfe der Ulbricht-Kugel oder anderer, ein diffuses Lichtfeld erzeugender optischer Baugruppen erreicht.

Die einzelnen Beleuchtungselemente besitzen erfindungsgemäß mindestens ein Leuchtmittel und bevorzugt eine Abbildungsoptik, mit welcher der von dem Leuchtmittel erzeugte Lichtbereich auf einem Leuchtbereich der Hand oder des Fingers abgebildet wird. Es ist klar, dass mit dem einzelnen Beleuchtungselement nicht die gesamte Hand oder der gesamte Finger beleuchtet wird, wenngleich dies grundsätzlich möglich ist. Günstig ist es aber, die zu beleuchtende Oberfläche der Hand beziehungsweise des Fingers in eine Vielzahl einzelner Bereiche aufzuteilen, die dann von entsprechenden Beleuchtungselementen unter dem für die Aufnahme optimalen Winkel (Totalreflexion) beleuchtet werden. Mit diesem Beleuchtungskonzept wird letztendlich der Umstand ausgenützt, dass die eingesetzten Kameras der Aufnahmeeinheit einen gewissen größeren Sichtbereich haben, unter welchem entsprechende Bilder oder Bildinformationen aufgenommen werden. Dieser kegelartige Sichtbereich wird, in Totalreflexion gesehen, auf die Hand- oder Fingeroberfläche projiziert, was zu entsprechenden Orten führt, an welchen die Beleuchtungselemente anzuordnen sind. Die Beleuchtungselemente beleuchten durch gerichtetes Licht die jeweilige Oberfläche.

Aufgrund dieses Konzeptes ergibt es sich, dass sich die jeweiligen Blickkegel der von der Aufnahmeeinheit eingesetzten Kameras derart überlappen, dass an dem gleichen Ort auf der Beleuchtungseinheit Leuchtbereiche in unterschiedlicher Richtung zu erzeugen sind. Dies wird dadurch gelöst, dass ein Beleuchtungselement mehrere, zumindest mindestens zwei Leuchtmittel aufweist. Des weiteren sind mindestens zwei Abbildungsoptiken vorgesehen. Die von den Leuchtmitteln erzeugten Lichtbereiche werden an der Hand oder dem Finger an unterschiedlichen Bereichen abgebildet. Durch die erfindungsgemäße Lösung werden demzufolge geschickterweise an einem geometrischen Ort unterschiedliche Lichtkegel bzw. Leuchtbereiche in unterschiedlichen Richtungen für unterschiedliche Einzelkameras erzeugt. Mindestens wird demnach erfindungsgemäß vorgesehen, dass das Beleuchtungselement zumindest ein Leuchtmittel aufweist.

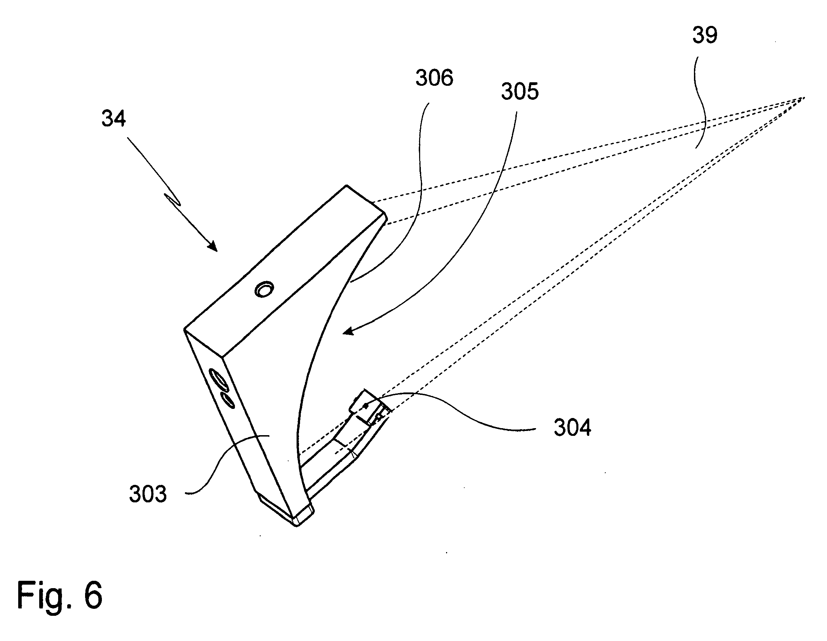

Geschickterweise wird erfindungsgemäß vorgesehen, dass das Beleuchtungselement eine Abbildungsoptik aufweist, um den von dem Leuchtmittel erzeugten Lichtbereich auf einem Leuchtbereich der Hand oder des Fingers abzubilden. Die Abbildungsoptik besteht dabei erfindungsgemäß zumindest aus einem oder mehreren der nachfolgenden optischen Bauteilen, nämlich einem Diffusor, einer Linse, einer Fresnelllinse, einem Freiformspiegel, einem Parabolspiegel, einem Objektiv, einem Spiegel, einem Prisma oder dergleichen. Mit Hilfe eines Diffusors wird ein möglichst homogenes (bezüglich der örtlichen Auflösung) Lichtfeld erzeugt. Mit Hilfe einer Linse beziehungsweise einer Fresnelllinse wird eine entsprechende Fokussierung auf den jeweiligen Bereich auf dem Finger oder der Hand erreicht. Es ist aber auch möglich, eine entsprechende Abbildung durch eine Spiegelanordnung, um Beispiel einem Freiformspiegel oder Parabolspiegel zu erreichen. Dieses Konzept ist zum Beispiel in Fig. 6 angedeutet.

In einer bevorzugten Ausgestaltung der Erfindung ist vorgesehen, dass beidseitig der durch die Anlage definierten Anlageebene an der Beleuchtungseinheit, gegebenenfalls durch einen Freiraum in Höhe der Anlageebene getrennt, Beleuchtungselemente vorgesehen sind.

Es ist Ziel der Erfindung, eine möglichst umfassende Aufnahme der Fingerlinien in einem Winkelbereich von ca. mindestens 175°, bevorzugt ca. 180° bis 220° anzufertigen. Diese Winkelangabe bezieht sich auf den Winkelbereich um die Fingerachse und erreicht, dass eine Aufnahme von Nagel zu Nagel realisiert wird. Da die Bilder in Totalreflexion aufzunehmen sind, um eine möglichst gute Qualität zu erreichen und die Kameras der Aufnahmeeinheit unterhalb der Auflageebene angeordnet sind, ergibt es sich, dass einzelne Beleuchtungselemente oberhalb der Anlageebene, gegebenenfalls durch einen Freiraum in Höhe der Anlageebene getrennt, angeordnet sind.

Da das Konzept für die Erstellung der Aufnahmen berührungslos ausgebildet ist, also den Fingern keine Auflageebene angeboten wird, wird mit Hilfe eines Lichtvorhanges (Lichtschranke als flächiges Element) ein Sicherheitsbereich definiert, um die Hand von den beweglichen Elementen der bewegbaren Beleuchtungseinheit sicher zu trennen. Streckt der Proband zum Beispiel seine Finger nach unten und verletzt den Lichtvorhang, führt dies zu einer Unterbrechung der Bewegung der Beleuchtungseinheit, um mögliche Verletzungsrisiken (zum Beispiel Quetschrisiken) sicher auszuschließen.

Des weiteren befindet sich auf Höhe der Anlageebene auch ein sogenanntes Seitentracking, es handelt sich dabei um eine entsprechende Überwachungseinheit, um die Höhenlage der aufgelegten Hand zu kontrollieren. Insbesondere wenn mit gerichtetem Licht gearbeitet wird, aber auch dem Umstand folgend, dass die Kameras nicht mit einer sehr großen Tiefenschärfe verfügbar sind, muss sichergestellt werden, dass die aufzunehmende Hand beziehungsweise Finger in einem entsprechend definierten Höhenkorridor liegen. Dies wird mit Hilfe dieser Seitentrackingkamera erreicht, die zum Beispiel vor den Fingerspitzen oder seitlich neben den Fingern angeordnet ist und zum Beispiel mit infrarotem Licht (allgemein mit Licht anderer Lichtfarbe als das ansonsten eingesetzte Licht, um entsprechende negative Beeinflussungen zu vermeiden) betrieben wird.

Insbesondere wird erfindungsgemäß vorgeschlagen, dass die Beleuchtungseinheit derart oberhalb der Auflageebene angeordnet ist, dass eine Beleuchtung des Fingers von oberhalb des Nagelbettes erfolgt. Hierdurch wird das Konzept der Totalreflexion optimal umgesetzt; die Beleuchtungseinheit ist mit einem entsprechenden Galgen ausgestattet, um auch die Beleuchtungselemente die oberhalb der Auflageebene angeordnet sind, zuverlässig zu halten.

Des weiteren ist in einer erfindungsgemäßen Variante gefunden worden, dass die Beleuchtungselemente an der Beleuchtungseinheit in einer Art Teilwannenform, der Oberfläche der Unterseite der Fingerspitze entsprechend, angeordnet sind und so eine Beleuchtungsfläche bilden. Eine solche Ausgestaltung ergibt sich dadurch, wenn für die verschiedenen Beleuchtungseinheiten ungefähr die gleichen geometrischen Eigenschaften gewählt werden. Somit haben dann alle Beleuchtungsmittel eine ähnliche optische Aufgabe bei ähnlichen geometrischen Randbedingungen, nämlich einen entsprechenden Leuchtbereich auf den Fingern beziehungsweise der Hand zu projizieren. Dies führt dann zu entsprechend gleichartig ausgebildeten Beleuchtungselementen, was die Herstellung etwas erleichtert. Charakteristischerweise wird mit Hilfe der Vorrichtung ein Finger nach dem anderen sequenziell aufgenommen. Da eine Aufnahme von Nagelbett zu Nagelbett beziehungsweise von Nagel zu Nagel erreicht werden soll, ist es günstig, dass die Finger entsprechend gespreizt sind und die Beleuchtungseinheit in der Lage ist, den gesamten gewünschten Winkelbereich, wie beschrieben, zu beleuchten. Daher ist die Beleuchtungseinheit der Oberfläche der Unterseite der Fingerspitze nachgebildet, was im Wesentlichen einer Teilwannenform entspricht. Aus diesem erfindungsgemäßen Vorschlag ergibt sich, dass eine teilwannenförmig gebogene Beleuchtungsfläche besteht. Im Übrigen ist die Beleuchtungsfläche beliebig gekrümmt.

In einer bevorzugten Ausgestaltung der Erfindung ist gefunden worden, dass weitere Beleuchtungselemente, von der Beleuchtungsfläche beabstandet, vorgesehen sind. Aufgrund der Anordnung des Freiraumes in Höhe der Anlageebene ergibt sich dort die Situation, dass Beleuchtungselemente, die in der Beleuchtungsfläche angeordnet sind, diese Teilbereiche unzureichend beleuchten können. Setzt man aber dann entsprechende Beleuchtungselemente, die nach hinten zurückgesetzt von der Beleuchtungsfläche beabstandet angeordnet sind, ein, so werden auch diese Bereiche optimal beleuchtet.

Nach der Erfindung wird vorgeschlagen, dass die Beleuchtungseinheit aus zwei oder mehreren, jeweils aus mindestens einem Beleuchtungselement bestehender Beleuchtungsgruppen besteht und die Beleuchtungsgruppen zu unterschiedlichen Zeitpunkten Licht abstrahlen. Es wurde bereits darauf hingewiesen, dass die Aufnahmeeinheit mehrere Kameras umfasst, um insbesondere die Aufnahme eines stereoskopischen Bildes zu ermöglichen. Der Sichtbereich der beiden Kameras überlappt sich daher teilweise. Um aber eine gute Aufnahmequalität zu erreichen, ist erfindungsgemäß vorgesehen, zum einen die Beleuchtungselemente jeweils unter Totalreflexion, bezogen auf den Beleuchtungsbereich, aber auch die Kameras jeweils auf Totalreflexion, also gegenüber der Vertikalen, um ca. 5° bis 15°, bevorzugt ca. 10° verkippt anzustellen. Um das Beleuchtungsszenario nicht zu beeinträchtigen wird erfindungsgemäß vorgeschlagen, dass jede Kamera der Aufnahmeeinheit ein eigenes, voneinander getrenntes Beleuchtungsszenario erhält, was dazu führt, dass es günstig ist, die Vielzahl der Beleuchtungselemente in zwei oder mehrere Beleuchtungsgruppen aufzuteilen und die Beleuchtungsgruppen dann zu unterschiedlichen Zeitpunkten Licht abstrahlen.

Der erfindungsgemäße Vorschlag eröffnet aber auch noch einen anderen Anwendungsbereich. Mit Hilfe der Positioniersteuerung beziehungsweise des Positioniersensors wird bekanntermaßen die Lage, Größe und Ausrichtung, insbesondere des Fingers bestimmt. Nun ist es so, dass der Durchmesser von Fingern erheblich schwankt und damit auch unter Umständen ein optimales Beleuchtungsszenario für eine Vielzahl unterschiedlicher Fingerdurchmesser nur sehr schwierig oder garnicht realisierbar ist. Darum ist in einer erfindungsgemäßen Variante vorgesehen, dass verschiedene Beleuchtungsgruppen zu unterschiedlichen Zeitpunkten Licht abstrahlen, in Abhängigkeit der Dicke des Fingers, also in Abhängigkeit einer Information der Positioniersteuerung. Auch hierdurch wird eine Beeinträchtigung der Hellfeldbetrachtungsweise im Überlappbereich der Sichtbereiche der Kameras zuverlässig vermieden. Dabei ist zu beachten, dass die Zusammenstellung der einzelnen Gruppen nicht statisch ist, also unveränderbar, sondern durchaus auch dynamisch, das heißt, die Zusammenstellung der Gruppen erfolgt situationsbezogen in einer erfindungsgemäßen Alternative, zum Beispiel durch die Beleuchtungssteuerung.

Erfindungsgemäß wird daher eine Beleuchtungssteuerung vorgesehen, und die Positioniersteuerung übermittelt der Beleuchtungssteuerung Informationen über die Lage, Größe und/oder Ausrichtung der Finger und/oder der Hand, wodurch dann eine entsprechende Auswahl der einzusetzenden Beleuchtungsgruppen, beziehungsweise Beleuchtungselemente und deren Abfolge erfolgt.

Es ist klar, dass die Auf teilung der Vielzahl von Beleuchtungselementen auf verschiedene Beleuchtungsgruppen nicht zwingend dazu führt, dass alle Beleuchtungselemente eingesetzt werden. Auf der anderen Seite ist es durchaus möglich, dass einzelne Beleuchtungselemente mehreren Beleuchtungsgruppen angehören. Dies hängt von den jeweiligen Aufteilungen ab, um eine möglichst optimale Aufnahme zu erreichen, die eine möglichst optimale Beleuchtung voraussetzt.

Erfindungsgemäß wird eine große Breite von Leuchtmitteln vorgeschlagen. Dies können zum Beispiel LED's, eine Laserdiode, ein Laser, eine Lampe, zum Beispiel eine Kleinlampe oder eine Halogenlampe oder auch das Lichtaustrittsende eines Lichtwellenleiters sein. Zu den Leuchtmitteln zählen daher alle diejenigen optischen Elemente, die Licht erzeugen oder abstrahlen, da die Leuchtmittel nicht zwingend selber aktiv leuchten müssen, sondern auch Elemente, zu denen Leuchtmittel zählen, die ihr Licht zum Beispiel an einer entsprechenden Stelle zur Verfügung stellen, ohne dieses Licht an dieser Stelle auch zu erzeugen. Auch ein solches Element ist als Leuchtmittel zu betrachten, da es bei dem Leuchtmittel darauf ankommt, einen entsprechenden Lichtkegel zur Verfügung zu stellen. Dieser Lichtkegel kann entweder selber erzeugt werden oder aber übermittelt werden. Das Lichtaustrittsende eines Lichtwellenleiters ist insofern ein passives Leuchtmittel, da zum Beispiel an einem zentralen Beleuchtungsort eine Vielzahl von Lichtwellenleiter mit Licht gespeist werden, die dann das Licht in die einzelnen Beleuchtungselemente leiten und dort in geeigneter Weise zur Verfügung stellen.

In einer bevorzugten Variante der Erfindung wird vorgeschlagen, dass als Lichtfarbe der Beleuchtungselemente Cyan, Grün und/oder Blau verwendet wird. Bevorzugterweise wird eine Aufnahmeeinheit eingesetzt, deren Kamera zum Beispiel bei Grün und Blau eine hohe Sensitivität aufweisen. Es ist daher günstig, als Lichtfarbe der Beleuchtungselemente Grün oder Blau einzusetzen, um exakt diesen Sensitivitätsbereich der Kamera zu treffen.

Nun ist der Sensitivitätsbereich bei den Kameras nicht ausgesprochen schmalbandig, sondern deckt einen gewissen Frequenzbereich ab, weswegen zum Beispiel bei Verwendung von nur einer Wellenlänge eine Cyan-Lichtfarbe günstig ist, da sie beide die grüne wie auch die blaue Sensitivität der Kamera ausreichend anspricht. Es werden daher die grünen und blauen Rezeptoren der Kamera gleichermaßen benützt, wodurch sich die örtliche Auflösung verbessert.

Insbesondere die Variante, dass als Lichtfarbe Grün und Blau verwendet wird, eröffnet die Möglichkeit, dass die auf den Fingern beziehungsweise der Hand benachbart angeordneten Leuchtbereiche mit Licht unterschiedlicher Lichtfarbe beleuchtet sind. Natürlich eignen sich hierfür jegliche andere unterschiedliche Lichtfarben. Die einzige Randbedingung, die dabei zu beachten ist, ist die farbliche Sensitivität der eingesetzten Kamera. Durch diese Ausgestaltung erreicht man nämlich folgendes:

Die Beleuchtungselemente erzeugen jeweils einen kegelartigen oder pyramidalen Lichtbereich, der zu einem rechteckigen, mehreckigen, ovalen oder runden Leuchtbereich auf der Finger- oder Handfläche (entsprechend seiner Krümmung) führt. Da nun die einzelnen aufzunehmenden Finger eines Probanden oder auch verschiedener Probanden sicherlich nicht gleichartig sind, ergibt es sich, dass sich die Randbereiche der benachbart angeordneten Leuchtbereiche derart überlappen, dass anstelle eines gerichteten, in Totalreflexion beobachteten Abbildes eher diffuse Lichtverhältnisse bestehen. Verwendet man aber jetzt ein Farbszenario wie beschrieben, bei welchem sich die Lichtfarben benachbart angeordneter Leuchtbereiche abwechseln und die Lichtfarben entsprechend der Sensitivität der Kameras gewählt ist, so stören diese Randbereiche nicht mehr, da unterschiedliche Farbrezeptoren angesprochen werden, die entsprechend getrennt auswertbar sind.

Des Weiteren wird erfindungsgemäß vorgeschlagen, dass die Beleuchtungseinheit zumindest ein Bündel von parallelen Linien auf die Finger- beziehungsweise Handoberfläche projiziert. Alternativ hierzu ist es möglich, dass in der Vorrichtung, zum Beispiel ortsfest (oder auch mit der Beleuchtungseinheit/Anlage mitfahrend), ein Beleuchtungselement vorgesehen ist, welches Bündel von parallelen Linien auf die Finger- beziehungsweise Handoberlfäche projiziert.

Mit Hilfe dieser Linienbündel beziehungsweise insbesondere zweier Linienbündel, die sich in einem gewissen Winkel schneiden, also eine Gitterstruktur ergeben, ist die räumliche Anordnung und Orientierung der einzelnen Bereiche möglich. Geschickterweise wird dabei für die Linienbündel beziehungsweise die Gitterprojektion (dabei muss diese nicht zwingend aus rechtwinklig zueinander liegenden Linienbündeln gebildet sein, sie können sich auch spitzwinkelig schneiden), eine andere Lichtfarbe als die Lichtfarbe der Beleuchtung der Leuchtbereiche gewählt. Oftmals werden Kameras mit mehreren farbsensitiven Rezeptoren eingesetzt, man belegt mit der Gitterprojektion, die der Orientierung/Lagebestimmung dient, eine Lichtfarbe, die auch einer Farbempfindlichkeit einer Kamera entspricht; hierzu wird zum Beispiel rotes Licht eingesetzt. Durch den Einsatz einer anderen Lichtfarbe der Linienbündel beziehungsweise Gitterprojektion als die Lichtfarbe der Bestrahlung der Leuchbereiche wird eine entsprechende Beeinflussung und Informationsverlust vermieden. Außerdem behindern die Linienprojektionen, die naturgemäß eine Mehrzahl von Leuchtbereichen durchqueren, die übliche Beleuchtungssituation in der Aufnahme nicht.

In einer weiteren vorteilhaften Ausgestaltung der Erfindung ist vorgesehen, dass an feststehenden Teilen der Vorrichtung zusätzliche Beleuchtungselemente vorgesehen sind. Wie bereits ausgeführt, können diese Beleuchtungselemente zum Beispiel für die Projektion von Bündeln von parallelen Linien oder der Projektion eines Gitters und so weiter dienen. Der Einsatz entsprechend angeordneter Beleuchtungselemente ist zum Beispiel auch dann günstig, wenn mit Hilfe der Beleuchtungselemente an der insbesondere verfahrbaren Beleuchtungseinheit gewisse Bereiche nicht ausreichend beleuchtet werden können.

Dabei wird erfindungsgemäß vorgesehen, dass das Beleuchtungselement selber ein Leuchtmittel aufweist, also aktiv ausgestaltet ist, oder aber zum Beispiel ein Spiegel ein Leuchtfeld reflektiert. In einer solche Variante handelt es sich um ein passiv ausgebildetes Beleuchtungselement. Beide Varianten gehören zur Erfindung.

In einer bevorzugten Ausgestaltung der Erfindung ist vorgesehen, dass mindestens ein Beleuchtungselement beziehungsweise ein Teil eines Beleuchtungselementes einen zusätzlichen Adaptionsantrieb aufweist. Mit Hilfe des Adaptionsantriebes wird ein Beleuchtungselement speziell nochmals auf einen entsprechenden Leuchtbereich optimiert einstellbar gestaltet. Dies kann dabei sowohl ein Beleuchtungselement sein, welches Teil der Beleuchtungseinheit ist, also mit diesem mitfahrend ist, es kann aber auch ein feststehendes, zusätzliches Beleuchtungselement sein, das zum Beispiel auf der Gehäuseinnenseite oder an der Anlage und so weiter angeordnet ist. Neben der Möglichkeit, das gesamte Beleuchtungselement mit Hilfe des Adaptionsantriebes einstellbar zu gestalten, ist erfindungsgemäß auch vorgesehen, dass zumindest ein Teil des Beleuchtungselementes mit Hilfe eines Adaptionsantriebes einstellbar ist. Dies kann sich zum Beispiel um die einzelnen optischen Elemente der Abbildungsoptik (zum Beispiel der Linse) handeln, die mit einem entsprechenden Adaptionsantrieb ausgestattet ist.

Vorzugsweise ist die Positionssteuerung so ausgebildet, dass sie auch auf den Adaptionsantrieb wirkt und so eine spezielle Einstellung des mit einem separaten Adaptionsantrieb ausgestatteten Beleuchtungselementes erreicht. Damit hängt die Steuerung des Adaptionsantriebes wiederum ab von der Information, die von dem Positioniersensor gewonnen wurden, also der Lage, Größe und/oder Ausrichtung des Fingers beziehungsweise der Hand.

Mit Hilfe einer Aufnahmeeinheit werden die Bilder, also die Aufnahmen der Hand- beziehungsweise Fingerlinien erzeugt. Geschickterweise ist die Aufnahmeeinheit auf der Beleuchtungseinheit beziehungsweise mit der Beleuchtungseinheit mitfahrend ausgebildet, um die optimalen optischen Verhältnisse auszunützen. Dabei wird vorgeschlagen, dass die Aufnahmeeinheit beziehungsweise deren einzelnen Kameras die Oberfläche des Fingers beziehungsweise der Hand unter Totalreflexion beobachten. Hieraus resultiert eine entsprechende Verkippung der Aufnahmeeinheit bezüglich der Vertikalen derart, dass diese den jeweiligen Sichtbereich unter Totalreflexion bezüglich der Beleuchtungseinheit beziehungsweise den von den einzelnen Beleuchtungselementen erzeugten Leuchtbereichen aufnehmen.

Es ist daher günstig, dass die Aufnahmeeinheit in nächster Nähe mit der Beleuchtungseinheit kombiniert ist. Insbesondere wird vorgeschlagen, dass die Aufnahmeeinheit mit der Beleuchtungseinheit mitfahrend ausgebildet ist und so in einfacher Weise möglichst optimale optische Bedingungen zur Verfügung gestellt sind.

Da ein dreidimensionales Abbild der Fingerspitze beziehungsweise des Finger- oder Handbereiches als Aufnahme gewonnen werden soll, ist es günstig, ein stereoskopisches Bild aufzunehmen. Dies wird durch eine Mehrzahl von Einzelkameras erreicht, die zusammen die Aufnahmeeinheit bilden. Bevorzugt werden dabei insgesamt zum Beispiel drei Einzelkameras eingesetzt, wobei sich eine erste, mittige Einzelkamera vertikal unterhalb des vorgestreckten Fingers befindet. Neben dieser ersten, mittigen Kamera befinden sich mit einem Verschwenkwinkel von ca. 50° bis 80°, bevorzugt von ca. 60°, jeweils seitlich, bezogen auf die Mittelachse, weitere Einzelkameras.

Die Mittelachse verläuft entlang der Längserstreckung des Fingers und ist eine Gerade, die insbesondere den Schwerpunkt des Fingers beinhalten kann. Von vorne gesehen, beschreibt die Mittelachse einen Punkt, die Einzelkameras sind um die Mittelachse herum in einem entsprechenden Verschwenkwinkel angeordnet, der Sichtbereich ist aber nicht genau unterhalb von unten nach oben angeordnet, sondern geht über der Lotrechten etwas nach hinten oder nach vorne verstellt.

In einer bevorzugten Variante der Erfindung ist vorgesehen, dass die Einzelkameras bezüglich der Vertikalen geneigt auf die Handlinien beziehungsweise den Fingerlinienbereich ausgerichtet sind, derart, dass sie unter Totalreflexion das Bild aufnehmen. Die Aufnahmeeinheit beobachtet nun mit Hilfe ihrer verschiedenen, mehreren Einzelkameras zum Einen die mit gerichtetem Licht gemäß der Hellfeld-Methode angeleuchteten Berge und Täler der Handlinien, zum Beispiel in grüner oder blauer Farbe, und zusätzlich wird von der Kamera, die zum Beispiel in rot abgestrahlte Gitterprojektion registriert. Aufgrund eines entsprechenden Kalibriervorganges ist die der Aufnahmeeinheit nachgeschaltete Auswerteinheit in der Lage, mit Hilfe der Gitterprojektion die tatsächliche Lage der aufgenommenen Bildinformationen (Hand- beziehungsweise Fingerlinien) im Raum festzulegen. Die Anordnung der verschiedenen Einzelkameras ist dabei so gewählt, dass sie zwar ein stereoskopisches Bild ergeben, aber im Überlappbereich von der ersten und zweiten Kamera droht Informationsverlust aufgrund diffusen Lichtes. Um dies zu vermeiden, schlägt die Erfindung zwei erfindungsgemäße Strategien vor.

Zum Einen ist es möglich, zunächst das Beleuchtungsszenario für die erste Kamera einzuschalten, bis das Bild mit der ersten Kamera gemacht ist, dann wird das Beleuchtungsszenario für die zweite Kamera eingeschaltet (der Beleuchtungssensor für die erste Kamera wird ausgeschaltet), damit auch diese eine entsprechende Aufnahme machen kann. Die Abfolge dieser beiden Bilder ist sehr kurz, um Bewegungen und so weiter nicht berücksichtigen zu müssen. Die beiden Aufnahmen sind unter Umständen in wenigen Hundertselmillisekunden abgeschlossen. Da der Überlappbereich insbesondere bei der mittig angeordneten Einzelkamera auftritt, werden die Beleuchtungsszenarien so gewählt, dass in einer ersten Beleuchtungsgruppe die Beleuchtungselemente eingeschaltet werden, die für die Aufnahme der jeweils außen liegenden Einzelkameras notwendig sind, hernach werden diese abgeschaltet und dann die Beleuchtungsgruppe beziehungsweise das Beleuchtungsszenario für die mittig angeordnete Einzelkamera eingeschaltet. Natürlich ist es möglich, die Abfolge umzukehren, das heißt, zuerst mit der mittig angeordneten Einzelkamera die Aufnahme zu beginnen und nachher die beiden außen liegenden Einzelkameras einzusetzen. Die einander gegenüberliegenden Außenkameras haben keinen gemeinsamen Überlapp, ihre Beleuchtungen beeinträchtigen einander nicht.

Die Anordnung der einzelnen Kameras entlang dem Fingerumfang (bezogen auf die Mittelachse des Fingers) ist dabei so gewählt, dass eine Aufnahme der gesamten Fingerlinie in einem Winkel von mindestens 175° oder mehr (bevorzugt zum Beispiel 180° - 200° oder 220°), insbesondere von Nagelbett zu Nagelbett möglich ist. Da die gesamte abgerollte Fingeroberfläche von den drei angeordneten Kameras gesehen wird, ist es grundsätzlich möglich, ein solch komplettes Abbild der Fingerspitze mit der dazugehörigen Fingerlinie als Aufnahme zu erzielen.

In einer bevorzugten Ausgestaltung der Erfindung ist eine Stroboskopbeleuchtung der Beleuchtungseinheit vorgesehen, welche mit der Aufnahme durch die Aufnahmeeinheit beziehungsweise der Einzelkamera synchronisiert ist. Hinsichtlich der Stroboskopbeleuchtung ist gefunden worden, dass die Bewegung einzelner Finger der Hand oder auch die Bewegungen der Bilderfassungseinrichtung wie beispielsweise der Kamera bei der Erzeugung der Aufnahmen eliminiert werden können. Verwacklungen oder unscharfe Aufnahmen können dadurch ausgeschlossen werden.

Des weiteren wird die erfindungsgemäße Aufgabe durch die Verwendung der Projektion einer Gitterstruktur auf die Finger beziehungsweise die Handoberfläche gelöst, wobei aus dem von einer Aufnahmeeinheit beziehungsweise deren mehreren Kameras aufgenommenen Bild auf die tatsächlichen räumlichen Anordnungen der gewölbten Finger-, Hand-, beziehungsweise Handoberfläche zu schließen ist. Die Gitterstruktur wird dabei zum Beispiel durch zwei zueinander geneigten Bündeln und parallelen Linien erzeugt. Sie werden in einer Lichtfarbe auf die Oberfläche projiziert, für die bei der Aufnahmeeinheit beziehungsweise den Kameras eine separate Sensitivität ausschließlich zur Verfügung steht. In einer erfindungsgemäßen Variante wird hierzu zum Beispiel als Lichtfarbe Rot verwendet, die den roten Kanal der entsprechenden Aufnahmekamera anspricht. Die eingesetzte Einzelkamera besitzt noch zwei weitere Sensitivitäten, nämlich für grünes und blaues Licht. Diese beiden Farbkanäle werden für die eigentliche Texturinformation der Fingerlinien (handelt es sich um einen Berg oder um ein Tal) eingesetzt. In der Einzelkamera liegt somit pro Pixel (umfasst drei Farbrezeptoren) folgende Information vor:

### Roter Kanal

hell - Bildpunkt liegt auf projizierter Linie oder Gitterkreuzpunkt,
dunkel - Bildpunkt liegt neben Gitterlinien.

### Grüner oder blauer Kanal

hell - Bildpunkt zeigt Berg der Fingertextur,
dunkel - Bildpunkt zeigt Tal der Fingertextur (je nach Einstellung).

Entsprechend der Auflösungen der Kamera wird diese Information für eine Vielzahl von einzelnen Bildpunkten angelegt; das komplette räumliche Abbild erfolgt aber erst nach einem weiteren Durchlauf dieser Informationen durch die Auswerteinheit. Zunächst aber ist die Gitterprojektion zu kalibrieren, derart, dass diese Gitterprojektion auf ein entsprechendes Kalibrierziel gerichtet wird und dieses Abbild in geeigneter Weise ebenfalls aufgenommen wird. Dabei ist natürlich die Geometrie des Kalibrierzieles bekannt, damit der Auswertalgorithmus der Auswerteinheit hieraus seine Schlüsse ziehen kann, wie die entsprechende räumliche Anordnung ist. Mit Hilfe dieser Kalibrierinformation ist es dann möglich, die tatsächliche Raumkoordinate des Bildpunktes in der Fingeroberfläche zu bestimmen. Man erhält dann ein entsprechendes 3-D Abbild des Fingers ohne entsprechende Verzerrungen, da der Finger nicht während der Aufnahme gequetscht oder verformt wird. Das ist der Vorzug der berührungslosen Aufnahmetechnik, die nach der Erfindung ebenfalls vorgeschlagen ist.

Mit Hilfe dieser Informationen ist es nun natürlich problemlos möglich, ein verzerrungsfreies Abrollbild der Fingermantelfläche zu erzeugen. Somit dient die Verwendung der Projektion in der Gitterstruktur auf die Finger- beziehungsweise Handoberfläche auch dafür, ein verzerrungsfreies Abbild der abgerollten Fingeroberfläche zu erhalten.

Im Zusammenhang mit dieser Anmeldung und dieser Erfindung wird darauf hingewiesen, dass alle Merkmale, die im Zusammenhang mit dem Vorrichtungsanspruch angeführt worden sind, auch im Zusammenhang mit dem Verwendungsanspruch einsetzbar und kombinierbar sind und als solches mit offenbart sind, gleiches gilt auch in umgekehrter Richtung, das heißt, Merkmale, die nur im Zusammenhang mit dem Verwendungsanspruch angeführt sind, sind in gleicher Weise auch bei der erfindungsgemäßen Vorrichtung einsetzbar, brauchbar und mit offenbart.

Diese Erfindung wurde mit Unterstützung der US-Regierung unter der Förder-Nr. 2005-IJ-CX-K071, zuerkannt von dem Justizministerium, angefertigt. Die Regierung hat bestimmte Rechte an der Erfindung.

Die Zeichnung zeigt ein Ausführungsbeispiel der Erfindung, die Erfindung ist auf die hier gezeigte Ausgestaltung in keinster Weise beschränkt, es gibt eine Vielzahl von weiteren Varianten der Erfindung.

Es zeigen:
- Fig. 1: In einer dreidimensionalen Ansicht die erfindungsgemäße Vorrichtung,
- Fig. 2: in einer dreidimensionalen Ansicht die Beleuchtungseinheit der erfindungsgemäßen Vorrichtung in Blickrichtung nach Pfeil II in Fig. 1,
- Fig. 3: in einer dreidimensionalen Ansicht einen vertikalen Schnitt durch die Beleuchtungseinheit der erfindungsgemäßen Vorrichtung,
- Fig. 4: in einer dreidimensionalen Ansicht die mit der Aufnahmeeinheit kombinierte Beleuchtungseinheit der erfindungsgemäßen Vorrichtung,
- Fig. 5: in einer dreidimensionalen Ansicht einen vertikalen Schnitt durch die kombinierte Beleuchtungseinheit/ Aufnahmeeinheit in der Blickrichtung nach Pfeil V aus Fig. 1,
- Fig. 6 und 7: in je einer dreidimensionalen Ansicht verschiedene Varianten des Beleuchtungselementes nach der Erfindung.

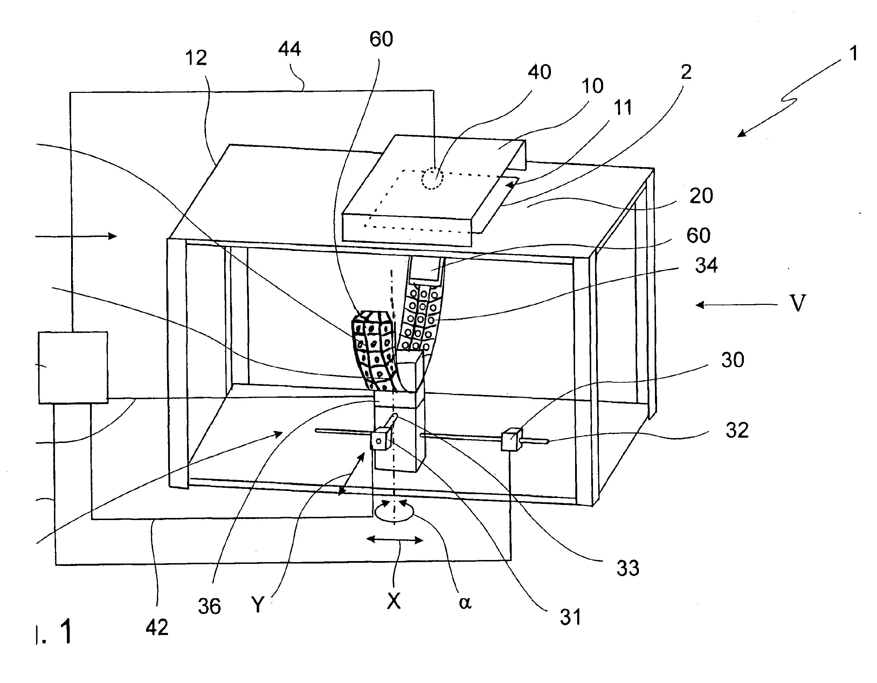

Die erfindungsgemäße Vorrichtung 1 ist in Fig. 1 schematisch dargestellt. In Fig. 1 ist die Vorrichtung 1 zur besseren Übersichtlichkeit offen gezeichnet, tatsächlich besteht die Vorrichtung 1 im Wesentlichen aus einem mehrseitig geschlossenen Gehäuse 12.

Das in diesem Ausführungsbeispiel im Wesentlichen rechteckig gestaltete Gehäuse 12 der Vorrichtung 1 besitzt an seiner Oberseite einen kastenartigen Überbau 10, unterhalb des Überbaus 10 befindet sich eine Öffnung 11. Durch die Öffnung 11 gelangt man widerstandslos in das Innere der Vorrichtung 1, in welcher die beweglich gelagerte Beleuchtungseinheit 3 vorgesehen ist. Die Öffnung 11 wird aber optisch und/oder elektronisch, zum Beispiel mit Hilfe eines Lichtvorhanges (auf ein Lichtschrankenprinzip basierendes, flächiges Überwachungsmittel) überwacht. Durch die offene Ausgestaltung mit Hilfe der Öffnung 11 ist es möglich, die aufzunehmende Hand- beziehungsweise Fingerlinie verzerrungsfrei abzubilden, ansonsten vorgesehene transparente Abdeckungen verschmutzen aufgrund des an den Fingern haftenden Schmutzes oder Schweißes und beeinträchtigen eine gute Aufnahme, dieser Nachteil wird durch das vorgeschlagene Konzept zuverlässig vermieden.

Die in Fig. 1 nicht gezeigte Hand liegt auf der Anlage 2 auf. Insofern hat die Anlage 2 hier die Funktion einer Auflage, ohne aber die Anlage 2 auf einen solchen Verwendungszweck zu beschränken. Neben dem Auflegen erfaßt die Anlage 2 aber auch die Möglichkeit, dass die Hand seitlich angelegt wird oder von unten an die Anlage 2 angelegt wird, je nachdem, wie das Konzept nach der Erfindung umgesetzt ist. In dem hier gezeigten Ausführungsbeispiel ist die Anlage 2 die Oberseite der Vorrichtung 1, diese bildet somit auch die Anlageebene 20.

Über der Öffnung 11, auf der Innenseite des Überbaues 10 ist ein Positioniersensor 40 vorgesehen. Der Positioniersensor 40 ist zum Beispiel als infrarotsensitive CCD-Kamera ausgebildet und derartig ausgestattet, dass er die gesamte, über der Öffnung 11 positionierte, in den Überbau 10 eingeführte Hand abbildet.

Der Positioniersensor 40 ist mit der Positioniersteuerung 4 über die Sensorleitung 44 verbunden. Der Positioniersensor 40 dient dazu, Informationen über die Lage, Größe und/oder Ausrichtung der Finger beziehungsweise der Hand zu übermitteln.

Die Positioniersteuerung 4 wertet die von dem Positioniersensor 40 übermittelten Informationen aus und wirkt dann über die Steuerleitungen 41, 42, 43 derart mit verschiedenen Fahrantrieben 30, 31 beziehungsweise Drehantrieben 36 der Beleuchtungseinheit zusammen, um die Beleuchtungseinheit 3 exakt unter dem Finger zu positionieren.

Die in Fig. 1 gezeigte Beleuchtungseinheit 3 ist verhältnismäßig einfach gehalten. Sie besteht aus einem nach oben offenen, U-förmigen Drehteil 35, welches auf seiner Innenseite eine Vielzahl von einzelnen Beleuchtungselementen 34 trägt. Schematisch sind zwei Einzelkameras 60 der Aufnahmeeinheit 6 angedeutet, diese werden später noch ausführlich erläutert.

Das Drehteil 35 sitzt auf einem entlang zweier rechtwinklig zueinander orientierten Führungsbahnen (Achsen) 32, 33 bewegbaren Schlitten.

Schematisch ist die Führungsbahn (Achse) 32 und die Führungsbahn (Achse) 33 angedeutet, geschickterweise ist eine Kreuzschlittenführung vorgesehen, derart, dass zum Beispiel die Y-Führungsbahn 33 auf dem Schlitten, der auf der X-Führungsbahn 32 beweglich ist, mitfährt. Das Drehteil 35 ist damit in einer zu den beiden Führungsbahnen (Achsen) 32, 33 parallelen Ebene bewegbar und aufgrund der Positioniersteuerung 4 auch exakt positionierbar. Es ist daher möglich, die Beleuchtungseinheit 3 in geeigneter Weise unter die jeweils aufzunehmenden Finger zu positionieren.

Die Positioniersteuerung 4 wirkt dabei über die beiden Steuerleitungen 41, 42 auf den Fahrantrieb 30 (X-Achse) beziehungsweise den Fahrantrieb 31 (Y-Achse). Die Fahrantriebe sind zum Beispiel als Rotationsantriebe ausgeführt, die Führungsbahn zum Beispiel als Gewindespindel realisiert, es gibt eine Vielzahl von Varianten, den Fahrantrieb erfindungsgemäß zu realisieren und gleichzeitig eine hochgenaue Positionierung zu ermöglichen.

Neben den beiden Linearachsen in X- und Y-Richtung ist auch eine Drehbarkeit des Drehteiles 35 vorgesehen. Die hierfür vorgesehene Drehachse 37 steht rechtwinklig auf der von den Führungsbahnen (Achsen) 32, 33 definierten Ebene. An der Beleuchtungseinheit 3 ist des Weiteren ein Drehantrieb 36 vorgesehen, der einen Drehwinkel *α* (beziehungsweise Verschwenkwinkel) um die Drehachse 37 des Drehteiles 35 bewirkt.

Auch auf diesen Drehantrieb 36 wirkt die Positioniersteuerung 4, hierzu ist die Steuerleitung 43 vorgesehen. Mit Hilfe der beiden Fahrantriebe 30, 31 sowie dem Drehantrieb 36 ist eine exakte Positionierung der die Beleuchtungselemente 34 tragenden Beleuchtungseinheit 3, exakt unterhalb des Fingers der aufzunehmen ist, möglich.

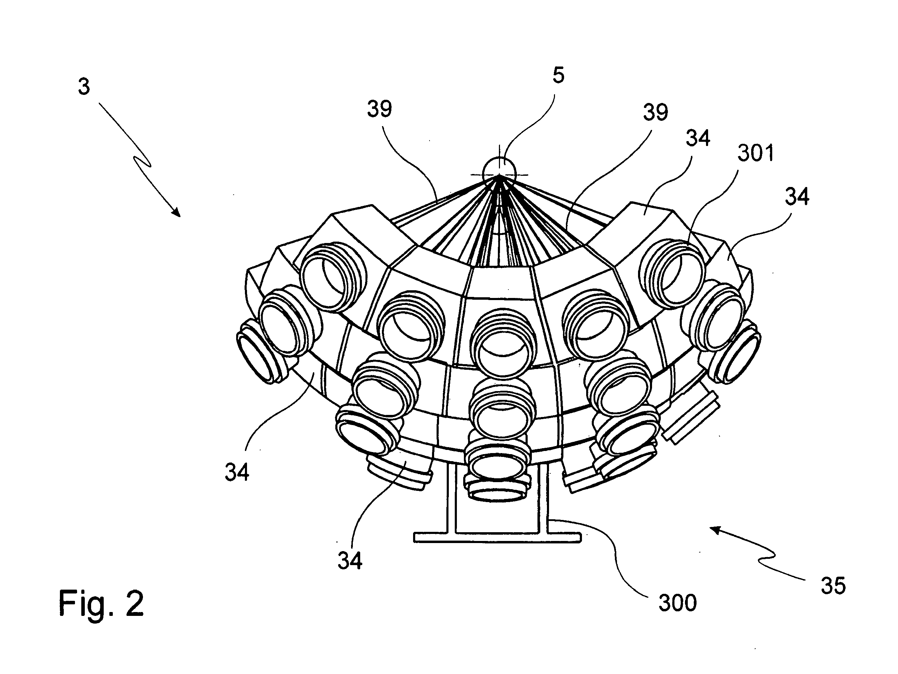

In Fig. 2 ist ein Detail der erfindungsgemäßen Vorrichtung 1 gezeigt. Die hier gewählte Blickrichtung ist in Fig. 1 mit dem Pfeil II angedeutet, wobei zur besseren Übersichtlichkeit das Gehäuse 12 der Vorrichtung 1 nicht gezeigt ist.

In Fig. 2 ist, von vorne gesehen, ein Finger 5 abgebildet. Dieser ist idealisiert kreisrund oder zylinderartig ausgebildet, wobei natürlich zu berücksichtigen ist, dass der Finger 5 eines Menschen ein aus mehreren Gliedern bestehendes, seine Oberfläche konkave und konvexe Oberflächenbereiche aufweisendes Element ist.

Es ist gut zu erkennen, dass der Kreisform des Fingers 5 folgend eine Vielzahl von Beleuchtungselementen 34 der Beleuchtungseinheit 3 unterhalb diesem angeordnet sind. Jedes dieser großen Anzahl von Beleuchtungselementen 34 richtet einen Lichtstrahl 39 auf einen speziellen Bereich der idealisiert als Zylindermantelfläche dargestellten Fingeroberfläche. Idealisiert handelt es sich bei den Lichtstrahlen 39 um Kegelstümpfe oder Pyramidenstümpfe, je nach Ausgestaltung der Abbildungsoptik der jeweiligen Beleuchtungselemente 34.

Gemäß der Erfindung ist erkannt worden, dass eine optimale Aufnahme mit einer Aufnahmeeinheit eine entsprechend Beleuchtung bedingt. Für kontrastreiche Aufnahmen wird in einer erfindungsgemäßen Variante die Hellfeld-Methode vorgeschlagen, die in Fig. 2 auch gezeigt ist, Einzelkameras 60 (in Fig. 2 nicht gezeigt) beobachten die Aufnahme in Totalreflexion des Lichtstahles 39. Dabei wird die Eigenschaft der Einzelkameras ausgenutzt, dass diese ein verhältnismäßig großes Raumwinkelsegment beobachten können. Eine Einzelkamera 60 beobachtet einen Bereich der Finger- oder Handoberfläche, die von einer Vielzahl von Beleuchtungselementen 34 beleuchtet wird.

Der Aufbau der Beleuchtungseinheit 3 ist wie folgt:

An einem Gestell 300 sind in mehreren Reihen beziehungsweise Spalten eine Vielzahl von Beleuchtungselementen 34 angeordnet. Einzelne Beleuchtungselemente 34 sind pyramidenstumpfartig ausgebildet, derart, dass die dem Finger 5 zugewandte Fläche geringer ist als die Rückseite, an welcher in kreisrunden Stutzen 301 Beleuchtungsmittel und so weiter befestigbar sind.

Die Anordnung ist so gewählt, dass die Beleuchtungelemente 34 zusammen eine teilwannenartige Gestalt der Beleuchtungseinheit 3 bilden, welche insofern dem vorderen Bereich der Fingerspitze nachempfunden ist. Aufgrund ähnlicher Abstände ist es möglich, ähnliche Abbildungsoptiken zu verwenden. Dabei projiziert jedes Beleuchtungselement 34 nur einen verhältnismäßig kleinen Leuchtbereich auf die Oberfläche des Fingers 5, der typischerweise einige Quadratmillimeter bis wenige Quadratzentimeter groß ist. Es ergibt sich somit eine schachbrettartige Aufteilung der Fingeroberfläche in eine Vielzahl unterschiedlicher Leuchtbereiche.

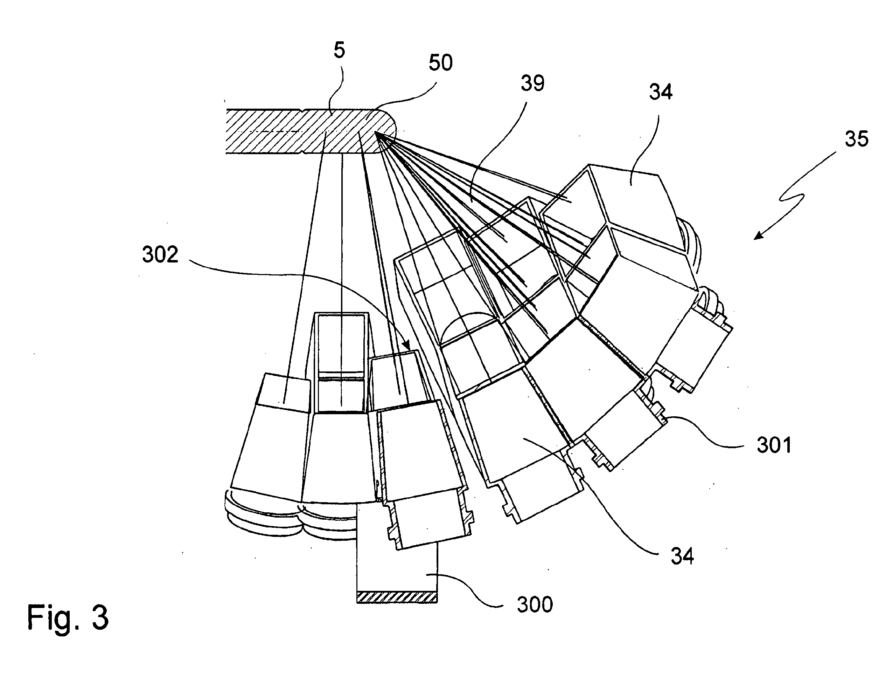

In Fig. 3 ist eine Seitenansicht nach Fig. 2 gezeigt. Es ist gut die Rundung der teilwannenförmig angeordneten Beleuchtungselemente 34 der Beleuchtungseinheit 3 zu erkennen, es bildet sich eine teilwannenartige Beleuchtungsfläche 302 aus.

Der Aufbau der Beleuchtungseinheit 3 ist dabei so gewählt, dass an dem Gestell 300 eine Vielzahl der Beleuchtungselemente 34 angeordnet sind, die untereinander zum Beispiel durch eine Klebung oder Verschweißung gehalten sind.

Die einzelnen Beleuchtungselemente sind untereinander unterschiedlich oder zumindest in Gruppen unterschiedlich, da sie an verschiedenen Orten der Beleuchtungsfläche 302 angeordnet sind. Es ist eine im Wesentlichen selbsttragende Anordnung, die nur an wenigen Stellen mit dem Gestell 300 verbunden ist, an dem Gestell 300 sitzt dann der Drehantrieb, der diesen gesamten oberen Teil als Drehteil 35 zu drehen vermag.

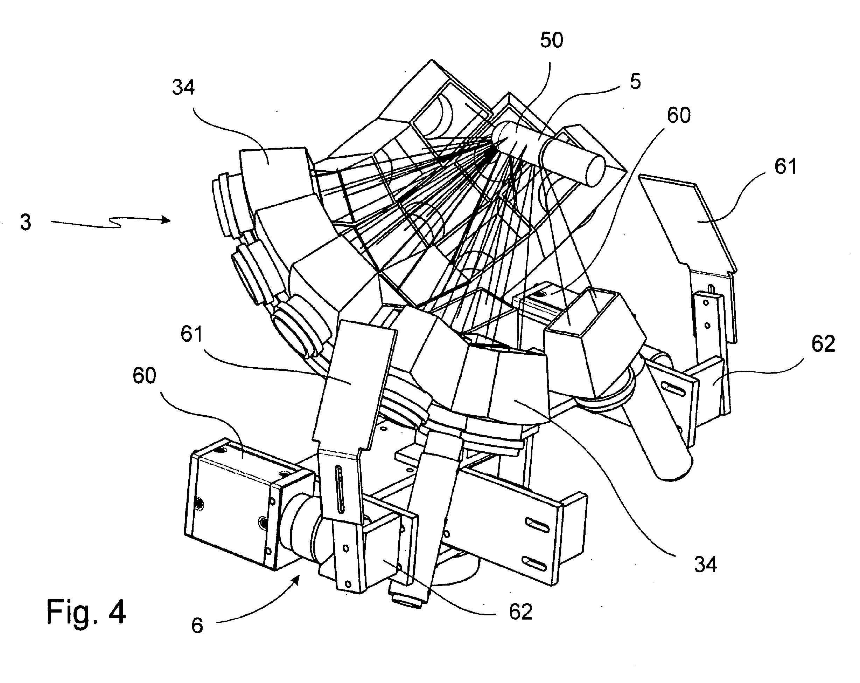

In einer bevorzugten Variante der Erfindung, wie sie in Fig. 4 gezeigt ist, umfasst die Beleuchtungseinheit 3 auch die Aufnahmeeinheit 6. Die Aufnahmeeinheit 6 besteht dabei aus mehreren Einzelkameras 60, die in dem hier gezeigten Ausführungsbeispiel unterhalb der Beleuchtungselemente 34 angeordnet sind. Auch die Aufnahmeeinheit 6 mit ihren Einzelkameras 60 und den anderen dazu notwendigen optischen Elementen (diverse Umlenkspiegel 61, 62) werden von dem Gestell 300 gehalten und sind Teil des Drehteiles 35. Damit vollführt die Aufnahmeeinheit 6 genau die gleichen Bewegungen wie die Beleuchtungseinheit 3 und die optischen Verhältnisse sind für jede Positionierung des Fingers die geichen.

Es ist gefunden worden, dass für eine optimale Beleuchtung am besten gerichtetes Licht eingesetzt wird, welches aus einer Vielzahl von in der Beleuchtungsfläche 302 angeordneten Beleuchtungselementen 34 abgestrahlt wird. Einige wenige der Beleuchtungselmente 34 haben gegebenenfalls noch eine zusätzlich Aufgabe, nämlich die Projektion von Bündeln paralleler Linien und/oder eines Gitters auf die Oberfläches des Fingers 5, um ein Orientierung zu ermöglichen.

Ziel ist es, ein Abbild der Fingeroberfläche von Nagel zu Nagel, also über ein Winkelsegment von mindestens ca. 175° und mehr (ca. 180° bis 220°) zu erreichen. Hierfür sind mehrere Einzelkameras 60 der Aufnahmeeinheit 6 vorgesehen, die zusammen ein stereoskopisches Bild der Fingeroberfläche 50 ergeben.

Mit Hilfe wenigstens einem der Umlenkspiegel 61, 62 wird das Bild der Fingeroberfläche 50 für die einzelnen Einzelkameras 60 gefaltet, wodurch der Vorteil entsteht, dass die Einzelkameras 60 nicht in der Beleuchtungsfläche 302 angeordnet werden müssen, wo sowieso schon Platzenge besteht, sondern sie können in einer größeren Entfernung zum Finger angeordnet sein als die Beleuchtungselemente 34.

Mit Hilfe des ersten Umlenkspiegels 61 wird dabei das jeweilige seitliche Bild der Fingeroberfläche 50 nach unten abgelenkt auf einen zweiten Umlenkspiegel 62. Der zweite Umlenkspiegel 62 lenkt das Abbild rechtwinklig um, um dieses in liegend angeordnete Einzelkameras 60 zu leiten. Hierdurch wird eine sehr platzsparende Anordnung realisiert.

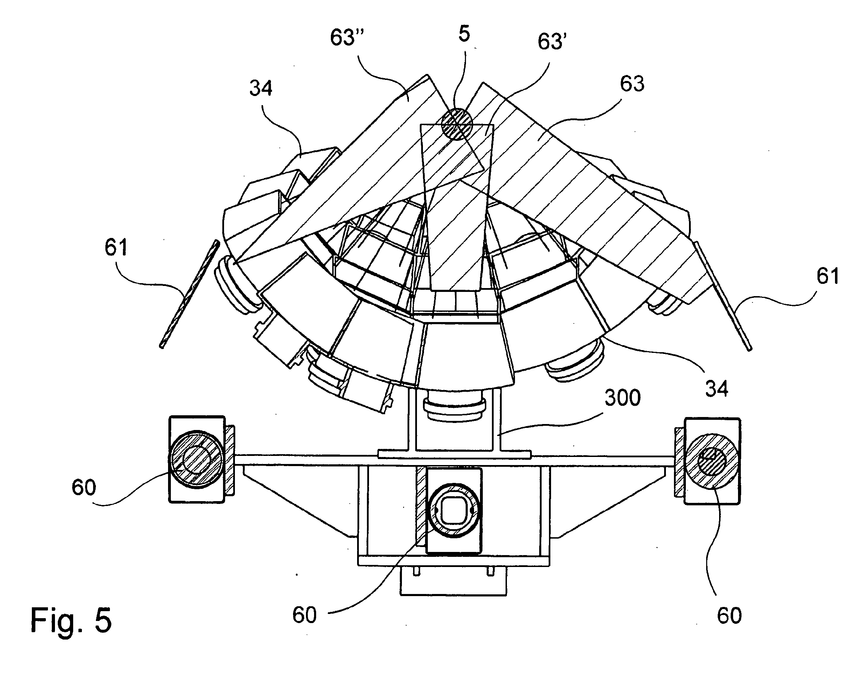

In Fig. 5 ist eine Ansicht in Richtung des Pfeiles V nach Fig. 1 gezeigt, es handelt sich dabei um eine Schnittdarstellung. Gut zu erkennen ist die nach hinten hochgezogene Anordnung der Beleuchtungselemente 34, die die teilwannenartige Beleuchtungsfläche 302 mit definieren.

In dieser Übersicht sind die drei Einzelkameras 60 gut zu erkennen, die sich unterhalb der Beleuchtungselemente 34 befinden. Für die mittlere Einzelkamera 60, die sich vertikal unterhalb des Fingers 5 befindet, ist in geeigneter Weise in der Beleuchtungsfläche 302 eine Öffnung oder ein Fenster vorgesehen, um den Sichtbereich 63' zu ermöglichen. Im Übrigen sind die einzelnen Sichtbereiche mit 63, 63' und 63'' angegeben. In dem hier gezeigten idealisierten Bild überlappen sich die Sichtbereiche 63, 63', 63'' erheblich, derart, dass man fast auf die untere Einzelkamera 60 (mittig angeordnet) verzichten könnte, da sich ihr Sichtbereich 63' auch durch die beiden anderen benachbarten Sichtbereiche 63 und 63'' ergeben würde. Diese Redundanz ist aber günstig für eine möglichst gute Aufnahme, da für eine stereoskopische Bildinformation gerade das Abbilden des gleichen Gegenstandes von verschiedenen Winkeln, also in verschiedenen Sichtbereichen 63, 63', 63'' günstig ist. Ein entsprechend großer Überlappungsbereich ist daher von Vorteil. Bezüglich der jeweiligen Beleuchtung werden dann gegebenenfalls unterschiedliche Beleuchtungsszenarien gewählt, da die Hellfeldbeleuchtung für eine erste Einzelkamera 60 unter Umständen zu einer diffusen Beleuchtung der anderen Einzelkamera 60 führen könnte.

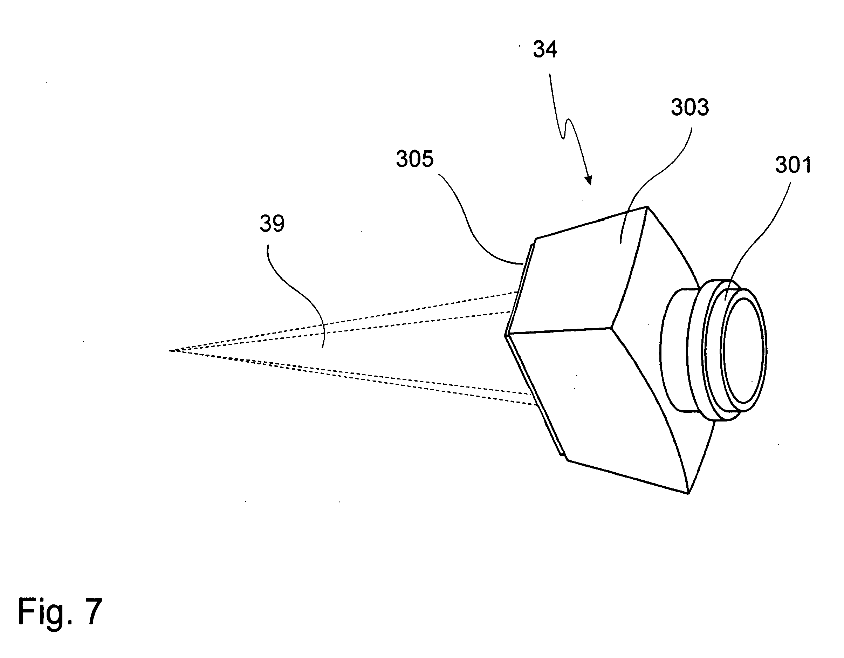

In Fig. 6, 7 sind verschiedene Varianten des Beleuchtungselementes 34 der Beleuchtungseinheit 3 gezeigt. Die verschiedenen Beleuchtungselemente 34 werden in mehreren Typen, in größerer Anzahl pro Beleuchtungseinheit 3 benötigt.

Im Einzelnen besteht ein Beleuchtungselemente 34 aus einem Träger 303, einem Leuchtmittel 304 und einer Abbildungsoptik 305, bei welchen die Lichtstrahlen 39 zum Beispiel als Leuchtfeld auf die Fingeroberfläche 50 projiziert wird.

Der Träger 303 hat zum einen die Aufgabe, die einzelnen Elemente des Beleuchtungselementes, nämlich das Leuchtmittel 304 und die Abbildungsoptik 305 zu tragen, aufgrund der selbsttragenden Konstruktion der Beleuchtungseinheit 3 in sich stellt der Träger 303 aber auch eine Verbindung mit den benachbarten Trägern benachbarter Beleuchtungselemente 34 dar.

Als Leuchtmittel 304 findet zum Beispiel eine Diode (LED) oder ähnliches Verwendung. Günstigerweise werden verhältnismäßig schmalbandig emmitierende Lichtquellen eingesetzt, also Lichtquellen, die möglichst monochromatisch sind, deren Lichtfarbe optimal der jeweiligen Sensitivität der Einzelkameras angepasst ist. Eine solche Maßnahme erhöht die Güte der Aufnahme erheblich.

Für die Ausgestaltung der Abbildungsoptik 305 gibt es eine Vielzahl von Vorschlägen. In der in Fig. 6 dargestellten Variante ist ein Freiformspiegel 306 vorgesehen, der parabolartig ausgebildet ist und das Leuchtmittel 304 ist im Brennpunkt dieses Paraboles angeordnet.

In Fig. 7 ist eine andere Variante des Beleuchtungselementes 34 gezeigt. Der Träger 303 ist hier kubusartig ausgebildet, der Kubus ist pyramidenstumpfartig realisiert mit einem rückseitig angeordnetem Stutzen 301, in welchem zum Beispiel das Beleuchtungsmittel und dessen elektrische Anschlüsse angeordnet sind. Auf der dem Stutzen 301 abgewandten Vorderseite befindet sich eine Abbildungsoptik 305.

Die Abbildungsoptik 305 besteht dabei zum Beispiel aus einem Diffusor für eine gleichmäßige Ausleuchtung des Leuchtfeldes 39 sowie einer Linse beziehungsweise Fresnellinse, die den Kubus abschließt.

## Patentansprüche

1. Vorrichtung zur berührungslosen Aufnahme von biometrischen Daten von Finger- und/oder Handlinien, wobei an der Vorrichtung eine Anlage (2) für die Hand beziehungsweise Finger sowie eine verfahrbare, positionierbare Beleuchtungseinheit sowie eine Positioniersteuerung (4) vorgesehen ist, wobei die Beleuchtungseinheit aus zwei oder mehreren jeweils aus mindestens einem Beleuchtungselement bestehenden Beleuchtungsgruppen besteht und die Beleuchtungsgruppen zu unterschiedlichen Zeitpunkten Licht abstrahlen und wobei die Beleuchtungseinheit eine aus mehreren Einzelkameras bestehende Aufnahmeeinheit umfasst, wobei die Positioniersteuerung (4) Informationen über die Lage und/oder Größe und/oder Ausrichtung der Finger und/ oder der Hand auswertet, **dadurch gekennzeichnet, dass** die Beleuchtungseinheit (3) Leuchtbereiche erzeugt und ein Beleuchtungselement vorgesehen ist, das zwei Bündel von Linien auf die Finger- beziehungsweise Handoberfläche projiziert, die sich in einem gewissen Winkel schneiden, so dass eine Gitterprojektion entsteht und die Lichtfarbe der Linienbündel anders als die Lichtfarbe der Beleuchtung der Leuchtbereiche vorgesehen ist, wobei die Beleuchtungseinheit (3) so ausgebildet ist, dass die Beleuchtungsszenarien so gewählt werden können, dass in einer ersten Beleuchtungsgruppe die Beleuchtungselemente eingeschaltet werden, die für die Aufnahme von jeweils 50° bis 80° seitlich, bezogen auf eine Mittelachse eines Fingers liegenden Einzelkameras notwendig sind und diese danach abgeschaltet werden und dann die Beleuchtungsgruppe für die erste, mittig, bezogen auf die Mittelachse des Fingers, angeordnete Einzelkamera ein geschaltet wird.

2. Vorrichtung nach Anspruch 1, **gekennzeichnet durch** eine feststehende Beleuchtungseinheit (3) und/oder feststehende Anlage (2).

3. Vorrichtung nach einem der vorhergehenden Ansprüche, **gekennzeichnet durch** das Beleuchtungselement (34), sowie auch das zusätzliche Beleuchtungselement, ein Leuchtmittel aufweist oder zum Beispiel wie ein Spiegel ein Leuchtfeld reflektiert, wobei bevorzugt mindestens ein Beleuchtungselement (34) beziehungsweise ein Teil eines Beleuchtungselements (34) einen zusätzlichen Adaptionsantrieb aufweist und/oder die Positionssteuerung (4) auf den Adaptionsantrieb wirkt.

4. Vorrichtung nach einem der vorhergehenden Ansprüche, da durch gekennzeichnet, dass an der Vorrichtung ein Positioniersensor (40) vorgesehen ist, der der Positioniersteuerung (4) Informationen über die Lage, Größe und/oder Ausrichtung der Finger und/oder der Hand übermittelt, wobei bevorzugt der Positioniersensor (40) an der Vorrichtung (1) ortsfest angeordnet ist oder der Positioniersensor (40) mit der Beleuchtungseinheit (3) beziehungsweise der Anlage (2) mitfahrend ausgebildet ist und insbesondere bevorzugt für die Verfahrbarkeit der Beleuchtungseinheit (3) beziehungsweise der Anlage (2) mindestens ein Fahrantrieb (30, 31) vorgesehen ist und die Positioniersteuerung (4) auf den Fahrantrieb (30, 31) wirkt.

5. Vorrichtung nach einem der vorhergehenden Ansprüche, **dadurch gekennzeichnet, dass** der Positioniersensor beziehungsweise eine Positionserfassungskamera die Lage der Hand und/oder aller Finger mit einer Aufnahme bestimmt und diese dabei erfassten Informationen von der Positioniersteuerung (4) an den oder die Fahrantrieb(e) (30, 31) zur Positionierung der Beleuchtungseinheit (3) weitergeleitet werden.

6. Vorrichtung nach einem der vorhergehenden Ansprüche, **dadurch gekennzeichnet, dass** während einer Positionierung der Beleuchtungseinheit (3) beziehungsweise Anlage (2) bezüglich eines ersten Fingers (5) oder Handbereiches die aktuelle Lage des Fingers (5) beziehungsweise Handbereiches von dem Positioniersensor (40) weiterhin erfasst wird und die Information über Lage, Größe und/oder Ausrichtung des Fingers (5) beziehungsweise Handbereichs fortlaufend für Nachregelzwecke der Dreh- (36) beziehungsweise Fahrantriebe (30, 31) an die Positioniersteuerung (4) übermittelt wird oder während einer Positionierung der Beleuchtungseinheit (3) beziehungsweise Anlage (2) bezüglich eines ersten Fingers (5) oder Handbereiches der Positioniersensor (40) die Lage, Größe und/oder Ausrichtung eines zweiten Fingers oder Handbereiches ermittelt und an die Positioniersteuerung (4) übermittelt, welche darauf die Positionierdaten für die Dreh- (36) beziehungsweise Fahrantriebe (30, 31) ermittelt, nach Abschluss der Aufnahme der biometrischen Daten an dem ersten Finger oder Handbereich eine Positionierung an dem zweiten Finger oder Handbereich erfolgt.

7. Vorrichtung nach einem der vorhergehenden Ansprüche, **dadurch gekennzeichnet, dass** die Beleuchtungseinheit (3) beziehungsweise die Anlage (2) in eine oder mehreren Ebene/n entlang zweier, winklig, insbesondere rechtwinklig zueinander orientierter Achsen (32, 33) verfahrbar und positionierbar ist.

8. Vorrichtung nach einem der vorhergehenden Ansprüche, **dadurch gekennzeichnet, dass** die Beleuchtungseinheit (3) beziehungsweise die Anlage (2) derart bewegbar ist, dass der Abstand zwischen der Beleuchtungseinheit (3) und der an der Anlage anliegenden Hand beziehungsweise Finger veränderbar ist, wobei insbesondere die Ebene über und/oder unterhalb der Anlage (2) angeordnet ist oder die Ebene seitlich neben der Anlage (2) angeordnet ist oder die Ebene im Wesentlichen vertikal oder horizontal orientiert ist und/oder die Ebene im Wesentlichen parallel orientiert zu der Anlage (2) ist.

9. Vorrichtung nach einem der vorhergehenden Ansprüche, **dadurch gekennzeichnet, dass** die Beleuchtungseinheit (3) ein um eine Drehachse (37) drehbares, die Beleuchtungselemente (34) tragendes, durch einen Drehantrieb (36) bewegbares und positionierbares Drehteil (35) aufweist, wobei bevorzugt die Positioniersteuerung (4) auf den Drehantrieb (36) wirkt, insbesondere die Drehachse (37) winkelig, insbesondere rechtwinklig zur Ebene orientiert ist.

10. Vorrichtung nach einem der vorhergehenden Ansprüche, **dadurch gekennzeichnet, dass** die Beleuchtungseinheit (3) mit mindestens zwei Arten unterschiedlicher Beleuchtungselemente (34) ausgestattet ist, die sich bezüglich der abgestrahlten Lichtfarbe unterscheiden und/oder in der Vorrichtung (1) weitere Beleuchtungsmittel vorgesehen sind, insbesondere das von der Beleuchtungseinheit (3) abgestrahlte Licht und das von dem Beleuchtungsmittel abgestrahlte Licht gleicher oder unterschiedlicher Lichtfarbe ist und/oder gerichtetes Licht der Beleuchtungselemente (34) der Beleuchtungseinheit (3) vorgesehen ist.

11. Vorrichtung nach einem der vorhergehenden Ansprüche, **dadurch gekennzeichnet, dass** wenigstens ein Beleuchtungselement (34) vorgesehen ist und das Beleuchtungselement (34) mindestens ein Leuchtmittel (304) aufweist, wobei das Beleuchtungselement(34) bevorzugt eine Abbildungsoptik (305) aufweist, um den von dem Leuchtmittel (304) erzeugten Lichtbereich auf einen Leuchtbereich der Hand oder des Fingers abzubilden und/oder ein diffuses Lichtfeld der Beleuchtungseinheit (3) vorgesehen ist und/oder ein Beleuchtungselement (34) mindestens zwei Leuchtmittel (304) aufweist und mindestens zwei Abbildungsoptiken (305) vorgesehen sind, um die von den Leuchtmitteln (304) erzeugten Lichtbereiche auf an der Hand oder Finger unterschiedlichen Bereiche abzubilden und/oder die Abbildungsoptik (305) mindestens eines oder mehrere der nach folgenden optischen Bauteile, nämlich einen Diffusor, eine Linse, eine Fresnellinie, ein Freiformspiegel (306), ein Parabolspiegel, ein Objektiv, einen Spiegel, ein Prisma oder dergleichen umfasst.

12. Vorrichtung nach einem der vorhergehenden Ansprüche, **dadurch gekennzeichnet, dass** die Beleuchtungseinheit (3) oberhalb der Anlageebene (20) angeordnet ist, derart, dass eine Beleuchtung des Fingers (5) von oberhalb des Nagelbettes erfolgt und/oder die Beleuchtungselemente (34) an der Beleuchtungseinheit (3) in einer Art Teilwannenform, der Oberfläche der Unterseite der Fingerspitze entsprechend, angeordnet sind und so eine Beleuchtungsfläche (302) bilden, bevorzugt weitere Beleuchtungselemente (34), von der Beleuchtungsfläche (302) beabstandet, vorgesehen sind, insbesondere die Beleuchtungseinheit (3) zwei oder mehrere, jeweils aus mindestens einem Beleuchtungselement (34) bestehenden Beleuchtungsgruppen besteht, und die Beleuchtungsgruppen zu unterschiedlichen Zeitpunkten Licht abstrahlen.

13. Vorrichtung nach einem der vorhergehenden Ansprüche, **dadurch gekennzeichnet, dass** eine Beleuchtungssteuerung vorgesehen ist und die Positioniersteuerung (4) der Beleuchtungssteuerung Informationen über die Lage, Größe und/oder Ausrichtung der Finger (5) und/oder Hand übermittelt und durch die Beleuchtungssteuerung eine Auswahl der einzusetzenden Beleuchtungsgruppen und deren Abfolge erfolgt, wobei insbesondere als Leuchtmittel (304) eine LED, eine Laserdiode, ein Laser, eine Lampe, zum Beispiel eine Kleinlampe oder eine Halogenlampe oder das Licht austrittsende eines Lichtwellenleiters vorgesehen ist und/oder als Lichtfarbe der Beleuchtungselemente (34) cyan, grün und/oder blau verwendet wird, wobei insbesondere bevorzugt die auf den Fingern beziehungsweise Handbenachbart angeordneten Leuchtbereiche mit Licht unterschiedlicher Lichtfarbe beleuchtet sind.

14. Vorrichtung nach einem der vorhergehenden Ansprüche, **dadurch gekennzeichnet, dass** mit der Beleuchtungseinheit (3) mitfahrend eine Aufnahmeeinheit (6) vorgesehen ist, wobei bevorzugt die Aufnahmeeinheit (6) aus mehreren Einzelkameras (60) besteht und die Einzelkameras (60) bezogen auf den Fingerumfang derart verteilt angeordnet sind, dass eine Aufnahme der gesamten Fingerlinien in einer Winkelsegment von mindestens 175°, bezogen um den Fingermittelpunkt, vorzugsweise von Nagelbett zu Nagelbett, erfolgt und/oder eine Strobroskobbeleuchtung der Beleuchtungseinheit (3) vorgesehen ist, welche mit der Aufnahme durch die Aufnahmeeinheit (6) beziehungsweise Einzelkameras (60) synchronisiert ist.

15. Verwendung der Projektion von zwei Bündeln von Linien, die sich in einem gewissen Winkel schneiden und der dadurch gebildeten Gitterstruktur auf die Finger- beziehungsweise Handoberfläche, um aus dem von einer Aufnahmeeinheit beziehungsweise deren mehreren Kameras aufgenommenen Bild/ern auf die tatsächliche räumliche Anordnung der gewölbten Finger-, Hand- beziehungsweise Handbereichsoberfläche zu schließen, um aus dem von einer Aufnahmeeinheit beziehungsweise deren mehreren Kameras auf genommenen Bild/ern ein verzerrungsfreies Abbild der abgerollten Fingeroberfläche zu erhalten, wobei eine andere Lichtfarbe der Linienbündel als für die Beleuchtung der Leuchtbereiche vorgesehen ist, wobei die Beleuchtungsszenarien so gewählt werden, dass in einer ersten Beleuchtungsgruppe die Beleuchtungselemente eingeschaltet werden, die für die Aufnahme von jeweils 50° bis 80° seitlich, bezogen auf die Mittelachse eines Fingers liegenden Einzelkameras notwendig sind und diese danach abgeschaltet werden und dann die Beleuchtungsgruppe für die erste, mittig, bezogen auf die Mittelachse des Fingers, angeordnete Einzelkamera eingeschaltet wird.

## Claims

1. Apparatus for the touchless recording of biometric data of finger and/or hand lines, wherein at the apparatus a rest (2) is provided for the hand and/or the fingers, as well as an illuminating unit that can be traversed and positioned, and a positioning control (4), wherein the illuminating unit consists of two or more illuminating groups each consisting of at least one illuminating element, with the illuminating groups emitting light at differing times, and wherein the illuminating unit comprises a recording unit consisting of several separate cameras, wherein the positioning control (4) evaluates information about the position and/or size and/or orientation of the fingers and/or the hand, **characterized in that** the illuminating unit (3) generates illumination regions and an illuminating element is provided projecting two bundles of lines onto the surface of the fingers and/or the hand cutting each other at a certain angle so that the result is a grid projection, and the light colour of the line bundles is different from the light colour of the illumination of the illumination regions, wherein the illuminating unit (3) is configured such that the illumination scenarios can be selected such that in a first illuminating region those illuminating elements are switched on that are required for recording by separate cameras positioned each 50° to 80° laterally with reference to a center axis of a finger, and those are switched off thereafter, and then the illuminating unit for the first separate camera positioned centrally with respect to the center axis of the finger is switched on.

2. Apparatus according to claim 1 **characterized by** a stationary illuminating unit (3) and/or stationary rest (2).

3. Apparatus according to one of the preceding claims **characterized by** the illuminating element (34) as well as the additional illuminating element having a light source or e. g. reflects an illumination zone in the way of a mirror, wherein preferably at least one illuminating element (34) and/or a part of an illuminating element (34) has an additional adaptation drive, and/or the positioning control (4) acts on the adaptation drive.

4. Apparatus according to one of the preceding claims, **characterized in that** at the apparatus a positioning sensor (40) is provided transmitting information about the position, size and/or orientation of the fingers and/or hand to the positioning control, wherein preferably the positioning sensor (40) is arranged stationary at the apparatus (1), or the positioning sensor (40) is configured such that it travels along with the illuminating unit (3) and/or the rest (2), and in particular preferred in order to be able to traverse the illuminating unit (3) and/or the rest (2) at least one traction drive (30, 31) is provided, and the positioning control (4) acts on the traction drive (30, 31).

5. Apparatus according to one of the preceding claims, **characterized in that** the positioning sensor and/or a position recording camera determines the position of the hand and/or all fingers with one recording, with the recorded information being conveyed by the positioning control (4) to the traction drive(s) (30, 31) for positioning the illuminating unit (3).

6. Apparatus according to one of the preceding claims, **characterized in that** during a positioning process of the illuminating unit (3) and/or rest (2) with respect to a first finger (5) or hand region, the current position of the finger (5) and/or the hand region is continuously recorded by the positioning sensor (40), and the information about position, size and/or orientation of the finger (5) and/or hand region is continuously transmitted to the positioning control (4) for re-adaptation purposes of the rotation (36) and/or traction drives (30, 31), or during a positioning process of the illuminating unit (3) and/or rest (2) with respect to a first finger (5) or region the positioning sensor (40) detects the position, size and/or orientation of a second finger or hand region, and transmits it to the positioning control (4) that then determines the positioning data for the rotation (36) and/or traction drives (30, 31), after completion of recording of the biometric data at the first finger or hand region a positioning is carried out at the second finger or hand region.

7. Apparatus according to one of the preceding claims, **characterized in that** the illuminating unit (3) and/or the rest (2) can be traversed and positioned in one or more plane(s) along two angular axes (32, 33), in particular orientated rectangularly to each another.

8. Apparatus according to one of the preceding claims, **characterized in that** the illuminating unit (3) and/or the rest (2) can be moved such that the distance between the illuminating unit (3) and the hand and/or fingers resting against the rest is changeable, wherein in particular the plane is arranged above and/or below the rest (2), or the plane is arranged on the side beside the rest (2), or the plane is orientated essentially vertically or horizontally, and/or the plane is orientated essentially parallel to the rest (2).

9. Apparatus according to one of the preceding claims, **characterized in that** the illuminating unit (3) has a rotating part that can be rotated around a rotational axis (37) and carries the illuminating elements (34) and can be moved and positioned by a rotational drive (36), wherein preferably the positioning control (4) acts on the rotational drive (36), in particular the rotational axis (37) is orientated angularly, in particular rectangularly to the plane.

10. Apparatus according to one of the preceding claims, **characterized in that** the illuminating unit (3) is equipped with at least two types of different illuminating elements (34) differing in the colour of the emitted light, and/or in the apparatus (1) other illuminating means are provided, in particular the light emitted by the illuminating unit (3) and the light emitted by the illuminating means has the same or different light colour, and/or directed light of the illuminating elements (34) of the illuminating unit (3) is provided.

11. Apparatus according to one of the preceding claims, **characterized in that** at least one illuminating element (34) is provided, with the illuminating element (34) having at least one light source (304), wherein the illuminating element (34) preferably has an optic imaging system (305) in order to image the light region generated by the light source (304) onto an illuminating region of the hand or the finger, and/or a diffuse light zone of the illuminating unit (3) is provided, and/or an illuminating element (34) has at least two light sources (304), and at least two optic imaging systems (305) are provided in order to image the light regions generated by the light sources (305) onto regions different on the hand or finger, and/or the optic imaging system (305) comprises at least one or more of the following optical components, namely a diffuser, a lens, a Fresnel lens, a free-form mirror (306), a parabolic mirror, an objective lens, a prism or the like.

12. Apparatus according to one of the preceding claims, **characterized in that** the illuminating unit (3) is arranged above the resting plane (20) such that the finger (5) is illuminated from above the nail bed, and/or the illuminating elements (34) are arranged at the illuminating unit (3) in a sort of partial trough-shape, corresponding with the surface of the underside of the finger tip, and thus form an illuminating surface (302), preferably additional illuminating elements (34) are provided, spaced apart from the illuminating surface (302), in particular the illuminating unit (3) consists of two or more illuminating groups, each consisting of at least one illuminating unit (34), and the illuminating groups emit light at different times.

13. Apparatus according to one of the preceding claims, **characterized in that** an illumination control is provided, and the position control (4) transmits information about the position, size and/or orientation of the fingers (5) and/or the hand to the illumination control, and the illumination control effects a selection of the illuminating groups and their sequence to be applied, wherein in particular as a light source (304) an LED, a laser diode, a laser, a bulb, for example a small bulb or halogen bulb, or the light emitting end of an optical fiber, and/or as light colour of the illuminating elements (34) cyan, green and/or blue is used, wherein in particular preferred the illuminating regions next to the fingers or hand are illuminated with light of different light colour.

14. Apparatus according to one of the preceding claims, **characterized in that** a recording unit (6) traveling along with the illuminating unit (3) is provided, wherein preferably the recording unit (6) consists of several separate cameras (60), and the separate cameras (60) are arranged with respect to the circumference of the finger such that in an angular segment of at least 175° with respect to the center point of the finger, preferably from nail bed to nail bed a recording of all finger lines is effected and/or a stroboscope illumination of the illumination unit (3) is provided synchronized with the recording by the recording unit (6) and/or the separate cameras (60).

15. Use of the projection of two line bundles cutting each other at a certain angle, and the grid structure thus formed onto the surface of the finger and/or hand in order to draw conclusions from the picture(s) recorded by a recording unit and/or its several cameras to the actual spatial arrangement of the arched surface of finger, hand or hand zone, in order to get a distortion-free image of the rolled-off finger surface from the picture(s) recorded by a recording unit and/or its several cameras, wherein another light colour of the line bundle than for the illumination of the illuminating regions is provided, wherein the illumination scenarios are chosen such that in a first illumination group the illumination elements required for the recording of cameras arranged 50° to 80° with respect to the center axis of a finger are switched on, and are switched off afterwards, and then the illumination group for the first separate camera arranged centered with respect to the center axis of the finger is switched on.

## Revendications

1. Dispositif pour enregistrer des données biométriques des empreintes digitales sans contact et/ou des lignes de la main comportant un appui (2) pour la main ou les doigts, une unité d'éclairage mobile et positionnable et un système de contrôle de position (4), l'unité d'éclairage consistant en au moins deux, voire plus de deux groupes d'éclairage dont chacun comporte au moins un élément d'éclairage, chaque groupe étant piloté de façon à envoyer de la lumière à des moments différents et l'unité d'éclairage comportant une unité de capture formée de plusieurs caméras individuelles, le système de contrôle de position (4) étant capable d'analyser des informations concernant la position et/ou la taille et/ou l'orientation des doigts et/ou de la main, **caractérisé en ce que** l'unité d'éclairage (3) produit des zones éclairées, et **en ce qu'**un élément d'éclairage est prévu projetant deux faisceaux de rayons sur les surfaces des doigts et lesdits rayons se coupent sous un certain angle afin de produire une projection d'une grille, et **en ce que** la couleur de la lumière des faisceaux de rayons est différente de la couleur des zones éclairées et **en ce que** l'unité d'éclairage (3) permet de sélectionner des scenarii d'éclairage démarrant d'abord les éléments d'éclairage d'un premier groupe d'éclairage destinés à des caméras individuelles situées sous 50° à 80° par rapport à l'axe central d'un doigt puis, après leur arrêt, le démarrage d'un groupe d'éclairage destiné à une première caméra centrale par rapport à l'axe central d'un doigt.

2. Dispositif selon la revendication 1, **caractérisé par** une unité d'éclairage immobile (3) et/ou par un appui (2) immobile.

3. Dispositif selon une des revendications précédentes, **caractérisé par** l'élément d'éclairage (34) et par l'élément d'éclairage supplémentaire comportant un moyen d'éclairage ou, par exemple un miroir réfléchissant une zone d'éclairage, de façon à ce que de préférence au moins un élément d'éclairage (34) ou une partie d'un élément d'éclairage (34) possède une commande d'ajustement supplémentaire et/ou en ce que le système de contrôle (4) agit sur la commande d'ajustement.

4. Dispositif selon une des revendications précédentes, **caractérisé en ce qu'**un capteur de position (40) est prévu au niveau du dispositif transmettant au système de contrôle de position (4) des informations concernant la position, la taille et/ou l'orientation des doigts et/ou de la main et **en ce que** le capteur de position (40) est de préférence immobile et fixé au dispositif (1) ou **en ce que** le capteur de position (40) se déplace avec l'unité d'éclairage (3) et l'appui (2) et **en ce que** de préférence la mobilité de l'unité d'éclairage (3) et de l'appui (2) est réalisée à l'aide d'au moins un moteur de déplacement (30, 31) et **en ce que** le système de contrôle de la position (4) agit sur ce moteur de déplacement (30, 31).

5. Dispositif selon une des revendications précédentes, **caractérisé en ce que** le capteur de position ou une caméra de capture de position détermine à l'aide d'une capture la position de la main et/ou de tous les doigts et **en ce que** les informations ainsi saisies sont transmises du système de contrôle de la position (4) vers le ou les moteur(s) de déplacement (30, 31) afin de positionner l'unité d'éclairage (3).

6. Dispositif selon une des revendications précédentes, **caractérisé en ce que** la position actuelle d'un doigt (5) ou d'une partie d'une main est saisie par le capteur de position (40) pendant que l'unité d'éclairage (3) et de l'appui (2) sont déplacés par rapport à un premier doigt (5) ou d'une partie d'une main et **en ce que** les informations concernant la position, la taille et/ou l'orientation du doigt (5) ou de la partie de la main sont en permanence transmises au système de contrôle de la position (4) afin de pouvoir ajuster les commandes de rotation (36) ou de déplacement (30, 31) ou **en ce que** la taille et/ou l'orientation d'un deuxième doigt (5) ou d'une partie d'une main est saisie et transmise par le capteur de position (40) au système de contrôle de la position (4) pendant que l'unité d'éclairage (3) et l'appui (2) sont déplacés par rapport à un premier doigt (5), permettant au système de contrôle de la position (4) de déterminer les données de positionnement nécessaires pour les commandes de rotation (36) et de déplacement (30, 31) afin de réaliser le déplacement vers le deuxième doigt ou la partie de la main dès que les données biométriques concernant le premier doigt ou d'une partie de la main sont saisies.

7. Dispositif selon une des revendications précédentes, **caractérisé en ce que** l'unité d'éclairage (3) ou l'appui (2) peuvent être déplacés et positionnés dans un ou plusieurs plans le long de deux axes (32, 33) formant entre eux un certain angle et de préférence un angle droit.

8. Dispositif selon une des revendications précédentes, **caractérisé en ce que** l'unité d'éclairage (3) et l'appui (2) sont mobiles de façon à ce que la distance entre l'unité d'éclairage (3) et la main ou le doigt en contact avec l'appui peut être modifiée et **en ce qu'**en particulier le plan est situé au-dessus et/ou en-dessous de l'appui (2) ou **en ce que** le plan est situé latéralement et donc à côté de l'appui (2) ou **en ce que** le plan est essentiellement orienté verticalement ou horizontalement et/ou **en ce que** le plan est essentiellement orienté parallèlement à l'appui (2).

9. Dispositif selon une des revendications précédentes, **caractérisé en ce que** l'unité d'éclairage (3) comporte un élément de rotation (35) pouvant pivoter et être positionné autour d'un axe de rotation (37) à l'aide d'une commande de rotation (36) et supportant les éléments d'éclairage (34) et **en ce que** de préférence le système de contrôle de la position (4) agit sur la commande de rotation (36) et **en ce qu'**en particulier l'axe de rotation (37) forme un angle et en particulier un angle droit avec le plan.

10. Dispositif selon une des revendications précédentes, **caractérisé en ce que** l'unité d'éclairage (3) est configurée avec au moins deux sortes différentes d'éléments d'éclairage (34) se différenciant par leur couleur d'éclairage et/ou **en ce que** d'autres moyens d'éclairage sont prévus au niveau du dispositif (1) et **en ce qu'**en particulier la lumière envoyée par l'unité d'éclairage et la lumière envoyée par le moyen d'éclairage sont de couleurs identiques ou différentes et/ou en ce que les éléments d'éclairage de l'unité d'éclairage envoient une lumière orientée.

11. Dispositif selon une des revendications précédentes, **caractérisé en ce qu'**au moins un élément d'éclairage (34) est prévu et **en ce que** l'élément d'éclairage (34) comporte au moins un moyen d'éclairage (304) et de préférence une optique d'imagerie (305) afin de transférer la zone éclairée par le moyen d'éclairage (304) vers une zone d'éclairage au niveau de la main ou d'un doigt et/ou **en ce qu'**une zone de lumière diffuse est créée par l'unité d'éclairage (3) et/ou **en ce qu'**un élément d'éclairage (34) comporte au moins deux moyens d'éclairage (304) et au moins deux optiques d'imagerie (305) afin d'envoyer les zones de lumière créées par les moyens d'éclairage (304) vers des zones différentes sur la main ou les doigts et/ou **en ce que** l'optique d'imagerie (305) comprend au moins un ou plusieurs des composants optiques suivants, un diffuseur, une lentille, une lentille de Fresnel, un miroir de forme quelconque (306), un miroir parabolique, un objectif, un miroir, un prisme ou un élément similaire.

12. Dispositif selon une des revendications précédentes, **caractérisé en ce que** l'unité d'éclairage (3) est situé au-dessus du plan de l'appui (20) de façon à ce que l'éclairage du doigt (5) s'effectue par en-dessus du lit de l'ongle et/ou **en ce que** les éléments d'éclairage (34) sont fixés sur l'unité d'éclairage (3) épousant partiellement une forme de cuvette correspondante à la surface inférieure de la pointe d'un doigt, créant ainsi une surface éclairée (302) et **en ce qu'**il existe de préférence d'autres éléments d'éclairage (34) distants de cette surface éclairée (302) et **en ce qu'**en particulier l'unité d'éclairage (3) consiste en deux ou plusieurs groupes d'éclairage pouvant envoyer de la lumière à des moments différents et dont chacune comporte au moins un élément d'éclairage (34).

13. Dispositif selon une des revendications précédentes, **caractérisé en ce qu'**un système de contrôle d'éclairage est prévu et **en ce que** le système de contrôle de la position (4) transmet des informations concernant la position, la taille et/ou de l'orientation des doigts (5) et/ou de la main vers le système de contrôle d'éclairage et **en ce que** le système de contrôle d'éclairage sélectionne les groupes d'éclairage et leur séquence et **en ce qu'**en particulier le moyen d'éclairage (304) prévu est une LED, une diode laser, un laser, une ampoule, éventuellement une mini-ampoule, une ampoule halogène ou la sortie d'un guide de lumière et/ou **en ce que** la couleur de la lumière des éléments d'éclairage (34) est cyan, vert et/ou bleu et **en ce qu'**en particulier et de préférence les zones éclairées voisines au niveau des doigts et de la main sont éclairées par de la lumière de couleurs différentes.

14. Dispositif selon une des revendications précédentes, **caractérisé en ce qu'**une unité de capture (6) est prévue de façon à se déplacer avec l'unité d'éclairage (3) et **en ce que** de préférence l'unité de capture (6) consiste en plusieurs caméras individuelles (60) et **en ce que** ces cameras individuelles (60) sont distribuées de telle façon par rapport à la circonférence du doigt qu'une capture de toutes les empreintes digitales dans un segment angulaire d'au moins 175° par rapport au point central du doigt et de préférence allant d'un côté du lit de l'ongle jusqu'à l'autre côté du lit de l'ongle et/ou **en ce qu'**un éclairage stroboscopique est prévu au niveau de l'unité d'éclairage et est synchronisé avec la capture via l'unité de capture (6) ou des cameras individuelles (60).

15. Utilisation d'une projection de deux faisceaux de rayons, se coupant sous un certain angle et de la structure de grille ainsi créée au niveau des surfaces de doigts et de la main afin de déduire la position réelle dans l'espace des surfaces courbées des doigts et des mains ou des zones d'une main à l'aide d'une ou plusieurs image(s) captée(s) par l'unité de capture ou ses multiples cameras et d'obtenir par l'unité de capture ou par ses multiples cameras une image sans distorsion de la surface déroulée d'un doigt et en ce qu'une couleur de lumière différente est prévue pour les faisceaux des rayons et des zones éclairées et en ce que des scénarii d'éclairage sont sélectionnés de façon à permettre de démarrer d'abord les éléments d'éclairage d'un premier groupe d'éclairage destinés à des caméras individuelles situées sous 50° à 80° par rapport à l'axe central d'un doigt puis, après leur arrêt, le démarrage d'un groupe d'éclairage destiné à une première caméra centrale par rapport à l'axe central d'un doigt.
